(19) **Europäisches Patentamt / European Patent Office / Office européen des brevets**

(11) **EP 2 904 754 B1**

(12) **FASCICULE DE BREVET EUROPEEN**

(45) Date de publication et mention de la délivrance du brevet:
**30.10.2019 Bulletin 2019/44**

(21) Numéro de dépôt: **13785507.8**

(22) Date de dépôt: **30.09.2013**

(51) Int Cl.:
**H04L 27/26** $^{(2006.01)}$

(86) Numéro de dépôt international:
**PCT/FR2013/052320**

(87) Numéro de publication internationale:
**WO 2014/053757 (10.04.2014 Gazette 2014/15)**

(54) **PROCEDE DE TRANSMISSION D'UN SIGNAL MULTIPORTEUSE, DISPOSITIF DE TRANSMISSION ET PROGRAMME D'ORDINATEUR CORRESPONDANTS**

VERFAHREN ZUR ÜBERTRAGUNG EINES MEHRTRÄGERSIGNALS SOWIE ENTSPRECHENDE ÜBERTRAGUNGSVORRICHTUNG UND COMPUTERPROGRAMM

METHOD FOR THE TRANSMISSION OF A MULTI-CARRIER SIGNAL, AND CORRESPONDING TRANSMISSION DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1259510**
**08.03.2013 FR 1352116**

(43) Date de publication de la demande:
**12.08.2015 Bulletin 2015/33**

(73) Titulaire: **Orange**
**75015 Paris (FR)**

(72) Inventeurs:
- **LANOISELEE, Marc**
  **F-35520 La Chapelle Des Fougeretz (FR)**
- **JAHAN, Bruno**
  **F-35190 Tinteniac (FR)**

(56) Documents cités:
**US-A1- 2007 140 367     US-B1- 6 757 299**

- **LEONARD J CIMINI JR ET AL: "Peak-to-Average Power Ratio Reduction of an OFDM Signal Using Partial Transmit Sequences", IEEE COMMUNICATIONS LETTERS, IEEE SERVICE CENTER, PISCATAWAY, NJ, US, vol. 4, no. 3, 1 mars 2000 (2000-03-01), pages 86-88, XP011083857, ISSN: 1089-7798**
- **YAN XIN ET AL: "Low complexity PTS approaches for PAPR reduction of OFDM signals", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 3, 16 mai 2005 (2005-05-16), pages 1991-1995, XP010826220, DOI: 10.1109/ICC.2005.1494687 ISBN: 978-0-7803-8938-0**

Printed by Jouve, 75001 PARIS (FR)

**Description**

**1. Domaine de l'invention**

Le domaine de l'invention est celui des communications radiofréquence pour lesquelles une modulation multiporteuse, notamment de type OFDM (« Orthogonal Frequency Division Multiplex » en anglais, pour « multiplexage par répartition orthogonale en fréquence »), est utilisée.

Plus précisément, la modulation OFDM est de plus en plus utilisée pour la transmission numérique, en particulier sur les canaux de transmission à trajets multiples. Cette technique de modulation multiporteuse permet notamment de s'affranchir de l'interférence entre symboles généralement observée lorsqu'on utilise une modulation monoporteuse sur un canal à trajets multiples. En outre, cette technique présente une très bonne efficacité spectrale et permet d'économiser des ressources spectrales radio par la mise en œuvre de réseaux mono-fréquence.

Du fait de sa robustesse intrinsèque aux canaux multi-trajets et aux canaux sélectifs en fréquence, la modulation OFDM est notamment, mais non exclusivement, utilisée dans les réseaux locaux sans-fil (WiFi), la radiotéléphonie mobile cellulaire 3GPP LTE (de l'anglais « 3rd Génération Partnership Project » et « Long Term Evolution ») », ou encore l'ADSL (de l'anglais « Asymmetric Digital Subscriber Line »), mais aussi pour des standards tels que ceux relatifs à la diffusion Audio Numérique (DAB pour « Digital Audio Broadcasting » en anglais), la Télédiffusion Numérique, dont notamment DVB-T (de l'anglais « Digital Video Broadcasting - Terrestrial ») ou encore le nouveau standard DVB-T2.

**2. Art antérieur**

*2.1 Inconvénients de la modulation OFDM*

Un inconvénient majeur de la technique OFDM est inhérent aux fortes fluctuations en amplitude de l'enveloppe du signal modulé et donc aux variations importantes de la puissance instantanée.

En effet, dans le domaine temporel, la sommation de ces multiples porteuses modulées de façon indépendante s'effectue en puissance la majeur partie du temps, mais aussi de façon cohérente ce qui conduit à des pics de puissance instantanée qui peuvent surpasser de plus de 10 dB la puissance moyenne du signal à certains instants.

Le rapport puissance crête à puissance moyenne (PAPR, pour « Peak to Average Power Ratio » en anglais) des signaux émis, en d'autres termes le facteur qui caractérise le niveau de ces pics de puissance par rapport à la puissance moyenne du signal, est ainsi généralement très élevé et il augmente avec le nombre de porteuses N.

Les amplificateurs de puissance présentent des caractéristiques non-linéaires qui, couplées à l'amplification des signaux dits à fort PAPR conduisent à des distorsions : remontée spectrale du niveau des lobes secondaires, génération d'harmoniques, création d'interférences entre symboles non linéaires, création d'interférences entre porteuses. Ainsi, ces distorsions entraînent notamment des erreurs de transmission et une dégradation du taux d'erreur binaire (TEB).

*2.2 Définition du PAPR*

Plus précisément, on utilise, selon un mode de réalisation particulier, un signal OFDM de bande B constitué de la somme de N porteuses orthogonales modulées régulièrement espacées d'intervalle de fréquence Δf tel que : B = N. Δf. Pour un bloc OFDM donné, chaque porteuse est modulée par un symbole $X_n$ appartenant à une constellation (QPSK, MAQ16, etc.). La transformée de Fourier inverse (IFFT) du signal fréquentiel de bande B, fournit alors dans le domaine temporel le signal $x(t)$, qui sera transmis. Dans le domaine temporel, la durée d'un bloc OFDM est de N.Te = 1/Δf, avec Te la période d'échantillonnage, et a pour expression :

$$x(t) = \frac{1}{\sqrt{N}} \cdot \sum_{n=0}^{N-1} X_n \cdot e^{j.2.\pi.n.\Delta.f.t} \ , 0 \leq t < N.Te$$

En supposant que les variables $X_n$, sont aléatoires, statistiquement indépendantes et centrées, on en déduit le PAPR du signal OFDM qui s'exprime comme :

$$PAPR = \frac{max_{0 \leq t < N.Te} \cdot |x(t)|^2}{E \cdot [|x(t)|^2]}$$

On constate qu'avec cette définition du PAPR, et $x(t)$ étant l'IFFT de variables aléatoires discrètes, le PAPR peut devenir aussi grand que N dans le cas particulier mais aussi très rare où $\{X_k\}_{k=0}^{N-1} = 1$.

En pratique, les pics de PAPR d'une amplitude donnée surviennent suivant une certaine probabilité d'apparition. Il est notamment peu probable que l'amplitude du signal soit aussi grande que N, et ce d'autant plus que N sera grand. Aussi, de manière classique, pour caractériser le PAPR d'un système OFDM, on fait appel à la fonction de distribution cumulative complémentaire (CCDF) qui fournit la probabilité que l'amplitude du signal dépasse un certain seuil. Cette fonction est la plus utilisée pour caractériser les systèmes de réduction de PAPR et a pour expression :

$$\mathrm{CCDF}_{PAPR} = \Pr[PAPR(X_L) > \gamma, \qquad L = 1]$$
$$\approx 1 - (1 - e^{-\gamma})^N$$

En pratique, cette équation indique par exemple que le signal ne pourra pas être correctement transmis sans saturation d'échantillon d'au moins un symbole sur cent avec un signal comportant 2048 porteuses si les convertisseurs numérique analogique et/ou analogique numérique et les amplificateurs de puissance ne travaillent pas avec un écart de dynamique entre puissance moyenne et puissance crête d'au moins 12,2dB, ce qui représente pour l'amplificateur un rapport de puissance de fonctionnement de 1 à 16.

En dessous de cette marge le signal sera écrêté ou pour le moins fortement distordu avec des répercussions sur les conditions de transmission et de réception.

### 2.3 Art antérieur pour la réduction du PAPR

Dans la littérature, de nombreuses techniques ont déjà été proposées pour pallier ce problème.

Une solution courante consiste à s'assurer que la plage de fonctionnement de l'amplificateur reste limitée à une zone d'amplification linéaire, ce qui limite malheureusement le rendement de l'amplificateur (quelques % au lieu de, classiquement, 50 %) et donc une augmentation importante de la consommation de l'émetteur. Ceci est une contrainte très forte pour l'utilisation de l'OFDM notamment dans les terminaux mobiles, sachant que la consommation de l'amplificateur de puissance peut représenter plus de 50% de la consommation totale d'un terminal.

Une deuxième approche est l'application d'une contrainte ou codage sur la séquence de données émise pour limiter le PAPR. Cette méthode consiste à construire un jeu de mots de code qui minimise le PAPR. Plusieurs techniques de construction de ces codes ont été proposées. L'avantage de cette solution réside dans le fait qu'elle n'introduit pas de distorsion. En revanche, l'efficacité spectrale est pénalisée sans même pour autant apporter un gain de codage. De plus, à ce jour, son champ d'application est limité aux modulateurs OFDM à faibles nombres de porteuses N du fait d'une trop grande complexité de calcul.

Une troisième approche, appelée communément « technique TI-CES (de l'anglais *« Tone Injection - Constellation Extension Scheme »*), propose d'augmenter le nombre de points des constellations qui modulent les porteuses OFDM afin que pour un point de la constellation d'origine il puisse correspondre plusieurs possibilités de coordonnées dans la nouvelle constellation. Selon cette approche, ce degré de liberté supplémentaire est utilisé pour générer un signal de plus faible PAPR. Cependant, cette méthode présente plusieurs inconvénients du fait que l'extension de constellation va conduire à un accroissement de la puissance moyenne du signal puisque les symboles supplémentaires ont des niveaux de puissance supérieurs. En outre, la sélection de la meilleure possibilité de coordonnées pour chaque point requiert un accroissement de la complexité du calcul mis en œuvre, le rendant inadapté à une implémentation matérielle pour le traitement de signaux en temps réel.

Une quatrième approche, appelée communément « technique CD (de l'anglais «*Constellation Distortion*») » est également basée sur une modification de constellation et repose sur l'hypothèse selon laquelle le niveau de sortie de l'amplification d'émission est limité par les pics de plus fort PAPR et que si l'amplitude de ces pics peut être diminuée alors la puissance émise peut être augmentée. Selon cette technique, pour un taux de distorsion donné, un problème d'optimisation, dit convexe est résolu afin d'élaborer un signal OFDM avec un niveau de PAPR global minimal. Cependant, cette méthode nécessite d'augmenter de façon très significative la puissance moyenne de sortie pour compenser la perte en termes de rapport signal à bruit. En outre, la complexité de calcul mise en œuvre augmente de manière exponentielle lorsque l'ordre de constellation devient élevé.

Une cinquième technique, appelée communément « technique ACE (de l'anglais « Active Constellation Extension ») » est également basée sur une modification de constellation et repose sur un déplacement effectué dans le sens d'un éloignement des axes de décision. Cependant, de la même manière que pour les deux méthodes précédentes, cette technique se caractérise par une efficacité moindre pour des constellations d'ordre élevé par l'accroissement de la puissance moyenne du signal, et par une complexité de calcul très élevée.

Une sixième méthode, appelée communément « technique TR (de l'anglais « *Tone Réservation* ») », propose de réserver certaines porteuses du multiplex OFDM, qui ne transportent pas d'informations mais des symboles optimisés à l'émission pour réduire le PAPR. L'optimisation de ces symboles peut être effectuée en utilisant par exemple un algorithme d'optimisation convexe de type SOCP (Second Order Cone Programming). Tout comme la méthode précédente, cette solution n'apporte pas de distorsion au signal émis, mais un inconvénient majeur de cette méthode réside dans le fait qu'un certain nombre de porteuses, doivent être réservées pour pouvoir réduire le PAPR de façon significative. Ces porteuses ne sont pas utilisées pour émettre des données d'informations utiles, ce qui conduit à une réduction de l'efficacité spectrale.

Une septième technique, appelée « Selected Mapping », consiste à appliquer une rotation de phase à chaque symbole de la séquence à transmettre. Plusieurs motifs de rotation de phase peuvent être définis. Pour chaque motif appliqué à la séquence à transmettre, on effectue les opérations pour obtenir un signal OFDM correspondant, et on transmet celui présentant le plus faible PAPR. De nouveau cette technique n'apporte pas de distorsion, mais elle nécessite de communiquer au récepteur la séquence de rotation utilisée à l'émission avec une très grande fiabilité, ce qui conduit à une réduction de l'efficacité spectrale et une augmentation significative de la complexité du système pour acheminer le motif de rotation appliqué via un canal dédié. En outre, si cette transmission est erronée, toute la trame OFDM sera perdue. Elle augmente également la complexité à l'émission, puisque plusieurs traitements doivent être effectués en parallèle, pour choisir ensuite le plus efficace. Les autres traitements ont été effectués inutilement, et ne sont pas exploités. Le document US2007/140367 divulgue un procédé où la valeur d'un seul bit sur une seule sous-porteuse est inverti pour réduire le PAPR.

Une dernière approche est la technique de « clipping », ou limiteur, qui consiste à écrêter l'amplitude du signal lorsqu'il dépasse un seuil prédéfini. Mais cet écrêtage est par nature non linéaire et introduit une distorsion du signal émis se traduisant non seulement par un TEB dégradé mais également par une remontée des lobes secondaires de la DSP (Densité Spectrale de Puissance).

Dans ce contexte particulier, les inventeurs ont donc identifié un besoin pour une nouvelle technique permettant d'améliorer la réduction du PAPR tout en restant simple à implémenter.

### 3. Exposé de l'invention

L'invention propose une solution nouvelle qui ne présente pas l'ensemble de ces inconvénients de l'art antérieur, sous la forme d'un procédé de transmission d'un signal OFDM dont le traitement avant émission comprend :

- un mapping de données représentatives d'un signal source sur des symboles complexes $X_n$, $0 \leq n < M$, appartenant à une constellation, n et M étant des entiers,
- une transformation de M symboles $X_n$ en M symboles corrigés $X'_n$, telle que $X'_n = X_n + d_n$ avec $d_n$ une correction complexe,
- un mapping des M symboles corrigés $X'_n$ sur N porteuses d'un modulateur OFDM pour générer le signal OFDM, N étant un entier, $M \leq N$,

La transformation comprend :

- une étape d'initialisation d'un accumulateur et

comprend pour chaque porteuse d'ordre n, n allant de 1 à M-1 :

- une étape d'accumulation dans l'accumulateur respectivement à J échantillons déjà présents de J échantillons temporels correspondant aux J échantillons de la porteuse d'ordre n mappée par $X'_n$, J étant un entier,
- une étape de détection d'un pic sur les J échantillons résultant de l'étape d'accumulation à l'ordre n-1 et de comparaison de ce pic avec l'échantillon temporel en coïncidence parmi J échantillons temporels de la porteuse d'ordre n délivrant une information de contrôle de correction complexe,
- une étape de correction déterminant la valeur complexe de correction $d_n$ pour obtenir le symbole corrigé $X'_n$ en fonction de l'information de contrôle de correction complexe.

L'invention concerne également un dispositif de transmission d'un signal OFDM. Selon l'invention, le dispositif de transmission comprend :

- un module de mappage pour mapper des données représentatives d'un signal source sur des symboles complexes $X_n$, $0 \leq n < M$, appartenant à une constellation, n et M étant des entiers,
- un module de transformation pour transformer M symboles $X_n$ en M symboles corrigés $X'_n$, telle que $X'_n = X_n + d_n$ avec $d_n$ une correction complexe,

- un modulateur OFDM à N porteuses pour générer le signal OFDM à partir des M symboles corrigés X'n mappés sur M porteuses, M étant un entier, M≤N et N-M porteuses n'étant pas mappées lorsque M≠N.

Le module de transformation comprend :

- un module de construction et d'accumulation pour accumuler J échantillons temporels correspondant aux J échantillons d'une porteuse courante d'ordre n mappée par X'n à J échantillons déjà présents, 1≤J,
- un module de détection d'un pic sur les J échantillons en sortie du module de construction et d'accumulation à l'ordre n-1 et de comparaison de ce pic avec l'échantillon temporel en coïncidence parmi J échantillons temporels de la porteuse courante d'ordre n délivrant une information de contrôle de correction complexe,
- un module de correction déterminant la valeur complexe de correction dn pour obtenir le symbole corrigé X'n en fonction de l'information de contrôle de correction complexe.

Un tel dispositif de transmission est notamment apte à mettre en œuvre le procédé de transmission selon l'invention.

Ainsi, l'invention repose sur une approche nouvelle et inventive de la réduction de PAPR d'un signal OFDM.

Plus précisément, la présente invention permet d'améliorer les performances de réduction de PAPR avec une complexité de calcul faible au regard des techniques de l'art antérieur.

En outre, la présente invention présente une grande flexibilité de modification de constellation au regard des modifications de constellation imposées par les techniques TI-CES, CD, ACE et TR.

En effet, le procédé selon l'invention modifie successivement et de manière contrôlée les symboles de constellations modulant les porteuses d'un bloc OFDM dans le domaine fréquentiel avant la mise en œuvre d'une transformée fréquence-temps.

Selon un mode particulier, la transformée fréquence-temps est une transformée de Fourier inverse discrète. Selon un mode particulier, la transformée de Fourier inverse est une transformée rapide (IFFT). Par la suite, les acronymes IFFT désignent la transformée fréquence-temps mise en œuvre par le modulateur OFDM permettant de générer le signal OFDM.

L'invention utilise, pour la réduction du PAPR un asservissement temps réel de la correction d'une porteuse, dite porteuse courante, par rapport aux porteuses précédemment corrigées d'un même bloc OFDM. Il faut entendre par correction d'une porteuse n, une correction du symbole Xn par la valeur dn pour donner le symbole X'n qui mappe cette porteuse n lors de la modulation OFDM effectuée par le modulateur OFDM.

Cet asservissement est notamment basé sur la mise en œuvre, pour corriger le symbole de constellation modulant une porteuse courante, d'une détection d'un pic de PAPR parmi un ensemble d'échantillons temporels représentatifs de la somme des réponses temporelles des porteuses précédemment corrigées.

Puis, en tenant compte de l'échantillon temporel de la porteuse que l'on cherche à corriger qui coïncide en temps avec le pic ainsi détecté, une information de contrôle de correction complexe est obtenue. Cette information de contrôle de correction complexe est ensuite utilisée pour déterminer la correction à apporter aux coordonnées complexes du symbole de constellation modulant la porteuse courante que l'on cherche à corriger.

Ainsi, à l'issue des étapes d'accumulation, de détection et de correction mentionnées ci-dessus mises en œuvre pour chacune des M porteuses mappées, le procédé réalise la « pré-construction » dans le domaine fréquentiel, c'est-à-dire avant la transformée fréquence-temps, du signal temporel corrigé constitué de J échantillons et associé à un bloc OFDM de N porteuses mappées par les M symboles correspondant (M≤N).

A cette fin, la transformation construit en parallèle les J échantillons temporels correspondant aux J échantillons de la porteuse d'ordre n-1 mappée par X'n-1 et accumule ces J échantillons dans l'accumulateur. Cette accumulation revient à ajouter ces J échantillons respectivement aux J échantillons déjà présents dans l'accumulateur. La transformation détecte après chaque accumulation l'apparition d'un pic de PAPR parmi les J échantillons accumulés. Par ailleurs, la transformation construit en parallèle les J échantillons temporels correspondant à la porteuse courante d'ordre n. La transformation compare le pic de PAPR détecté parmi les J échantillons résultant de l'accumulation jusqu'à l'ordre n-1 avec l'échantillon temporel, parmi les J échantillons temporels de la porteuse courante d'ordre n, positionné au même indice dans le bloc de taille J. La transformation détermine une information de contrôle de correction complexe qui permet de déterminer une valeur complexe de correction. En particulier, si le pic et l'échantillon temporel ont des amplitudes et phases respectives qui vont conduire à une amplification du pic après accumulation à l'ordre n, la valeur complexe de correction est déterminée pour s'opposer à l'effet d'amplification.

Selon une particularité de mise en œuvre, le procédé développe le calcul d'une transformée de Fourier discrète inverse d'un bloc de N porteuses, dont M porteuses sont mappées par les symboles X'n en effectuant le calcul porteuse après porteuse et pour une porteuse n donnée mappée par X'n, en calculant chaque échantillons I temporels, I variant entre 0 et J -1. Le procédé détermine ainsi les échantillons temporels associés à une porteuse mappée par X'n. L'accumulation consiste ensuite à additionner les J échantillons temporels de la porteuse courante n respectivement aux J échantillons précédents déjà accumulés concernant les porteuses jusqu'à l'ordre n-1.

Il est à noter que la transformée fréquence-temps qui est généralement une transformée de Fourier inverse peut intervenir sur un nombre M de porteuses mappées par les M symboles considérés, inférieur à N le nombre de porteuses du modulateur OFDM. En effet, il est commun de réserver des porteuses pour y insérer des pilotes, pour limiter les problèmes de recouvrement de spectre en mettant à zéro les porteuses des bords, pour éviter une composante continue en mettant à zéro la porteuse centrale.

Il est à noter que le terme « pré-construction » signifie que l'on détermine, alors même que l'on est dans le domaine fréquentiel, les échantillons temporels de la réponse du signal qui « pourraient » être obtenus après IFFT. En effet, l'invention vise à corriger les coordonnées complexes du symbole de constellation modulant une porteuse courante dans le domaine fréquentiel.

Ainsi, le terme « préconstruit » est associé aux échantillons temporels éventuellement corrigés avant mise en œuvre du modulateur OFDM.

Par « complexe », on entend « qui peut avoir une valeur réelle et/ou imaginaire telle que cette valeur est par exemple définie par v=a+jb ».

Un tel procédé aboutit donc à une correction globale du signal temporel OFDM du fait que chaque porteuse d'un bloc OFDM peut être corrigée.

La correction du signal temporel est optimisée du fait que le déplacement complexe de coordonnées de constellation est déterminé en fonction d'une information de contrôle de correction complexe. Comme décrit par la suite, une telle dépendance entre le déplacement complexe de coordonnées de constellation et l'information de contrôle de correction complexe permet de construire une nouvelle constellation. Cette nouvelle constellation peut correspondre par exemple et de manière particulière à une constellation modifiée ou à une combinaison des constellations issues des techniques de modification de constellation précédemment citées à savoir les techniques TI-CES, CD, ACE et TR.

Dans cette configuration un avantage de la technique proposée selon l'invention est donc de pouvoir gagner en efficacité en permettant d'associer plusieurs techniques de modification de constellation, dont les défauts respectifs distincts peuvent se compenser dans une certaine mesure grâce au contrôle de correction basé sur la mise en œuvre d'un asservissement temps réel entre une porteuse courante à corriger et les porteuses qui la précèdent dans le temps et qui ont été précédemment corrigées.

Selon un aspect particulier de l'invention, l'étape de détection sur les J échantillons résultant de l'étape d'accumulation à l'ordre n est mise en œuvre par rapport à une étape de génération des J échantillons temporels associés à la porteuse courante d'indice n avec un retard de durée prédéterminée correspondant à un cycle d'horloge.

La mise en œuvre de ce retard selon un cycle d'horloge prédéterminé permet notamment de synchroniser l'obtention de l'information de contrôle de correction complexe afin qu'elle soit délivrée juste au moment où intervient l'étape de correction du symbole de constellation modulant la porteuse courante d'ordre n à corriger permettant d'obtenir X'n qui intervient dans l'étape d'accumulation à l'ordre n+1.

De façon préférentielle, le pic détecté est un pic en puissance, les J échantillons temporels de la porteuse d'ordre n sont complexes et l'information de contrôle de correction complexe appartient à au moins une des catégories suivantes :

- information de contrôle de correction complexe dont la partie réelle, respectivement imaginaire, est positive lorsque le signe du pic et de la partie réelle, respectivement imaginaire, de l'échantillon temporel complexe correspondant sont identiques,
- information de contrôle de correction complexe dont la partie réelle, respectivement imaginaire, est négative lorsque le signe du pic et de la partie réelle, respectivement imaginaire, de l'échantillon temporel complexe correspondant sont opposés,
- information de contrôle de correction complexe dont la partie réelle, respectivement imaginaire, est nulle lorsque l'amplitude de puissance de l'échantillon temporel du pic détecté correspondant est inférieure à un seuil prédéterminé, ou lorsque ladite porteuse courante d'indice n est dite « réservée » et ne doit pas être corrigée, par exemple dans le cas où l'insertion de symboles pilotes intervient avant la mise en œuvre du procédé selon l'invention

Ainsi, l'information de contrôle de correction complexe permet de contrôler la réduction du pic de PAPR en tenant compte de la corrélation de signe entre le pic des échantillons temporels préconstruits représentatifs des porteuses précédemment corrigées et accumulées et l'échantillon temporel complexe de la porteuse courante à corriger en coïncidence temporel avec le pic détecté.

Il est donc possible de contrôler la correction mise en œuvre d'une porteuse à l'autre de façon optimisée, en tenant compte de la corrélation entre une porteuse courante à corriger et le pic détecté à partir de l'accumulation des porteuses précédemment corrigées, ou en tenant compte de l'identification de porteuses dites « réservées » dont le symbole de constellation doit rester constant. Il est donc possible selon un aspect particulier de l'invention, qu'aucune correction ne soit apportée à des porteuses « réservées » prédéterminées ou préalablement identifiées.

Avantageusement, l'étape de correction met en œuvre une sommation des coordonnées du symbole de constellation avec des coordonnées représentatives d'un déplacement complexe du symbole de constellation sur les axes des abscisses et des ordonnées du plan complexe de la constellation de ce symbole, le déplacement complexe étant sélectionné au moyen de l'information de contrôle de correction complexe, parmi les déplacements complexes appartenant à au moins une des catégories suivantes :

- déplacement réel, respectivement imaginaire, du déplacement complexe, négatif lorsque l'information de contrôle de correction complexe comporte une partie réelle, respectivement imaginaire, positive;
- déplacement réel, respectivement imaginaire, du déplacement complexe positif lorsque l'information de contrôle de correction complexe comporte une partie réelle, respectivement imaginaire, négative;
- déplacement réel, respectivement imaginaire, du déplacement complexe nul lorsque l'information de contrôle de correction complexe comporte un partie réelle, respectivement imaginaire, nulle.

Par « déplacement réel du déplacement complexe » on entend le déplacement selon l'axe des réels de la partie réelle du déplacement complexe. Par « déplacement imaginaire du déplacement complexe » on entend le déplacement selon l'axe des imaginaires de la partie imaginaire du déplacement complexe. En effet, les déplacements de la partie réelle et de la partie imaginaire du symbole de constellation sont indépendants l'un de l'autre. Par exemple la partie réelle du symbole de constellation peut être déplacé positivement au regard de l'axe des réels alors que la partie imaginaire peut être déplacée négativement au regard de l'axe des imaginaires.

Ainsi, l'invention propose un contrôle du déplacement complexe de chaque symbole de constellation modulant une porteuse sur les axes des abscisses et des ordonnées du plan complexe de la constellation de ce symbole. On obtient donc un déplacement complexe contrôlé des symboles de constellation qui peut être distinct d'un symbole de constellation modulant une porteuse à un autre symbole de constellation modulant une autre porteuse.

En d'autres termes, il est par exemple possible que les composantes réelles et/ou imaginaire du symbole de constellation modulant une porteuse d'indice $n+g$, avec $g$ entier tel que $0 \leq n+g \leq N-1$ soient corrigées selon un déplacement complexe avec une partie réelle, respectivement imaginaire, positive tandis que la composante réelle, respectivement imaginaire, du symbole de constellation modulant la porteuse d'indice n est corrigée selon un déplacement complexe avec une partie réelle, respectivement imaginaire, négative.

La nature du déplacement complexe étant contrôlée, les déplacements complexes mis en œuvre peuvent conduire à conserver les points de constellation dans leur secteur de décision ou dans la constellation d'origine lorsqu'une correction de mapping de type CD est choisie par exemple, ou bien à les déplacer en dehors lorsque une correction de type ACE ou CES est choisie suivant un autre exemple de correction.

En outre, les déplacements complexes nuls conduisent à conserver des points de la constellation d'origine, en d'autres termes sans correction.

Selon un aspect particulier de l'invention, la valeur absolue de la partie réelle, respectivement imaginaire, du déplacement complexe est fixe d'une porteuse à l'autre du bloc OFDM et cette valeur absolue correspond à une valeur prédéterminée. Par exemple, cette valeur de déplacement complexe est égale à 0,25 ou 0,5 fois la distance du point de constellation à la frontière du secteur de décision.

La constance de la valeur absolue de la partie réelle, respectivement imaginaire, du déplacement complexe permet notamment de limiter la complexité de mise en œuvre de l'invention.

Selon un mode de réalisation, le procédé selon l'invention construit J=L.N échantillons temporels avec L un entier supérieur ou égal à 1. Lorsque L=1 alors J= N. Lorsque L > 1, par exemple lorsque L= 2 ou 4, il y a sur échantillonnage. Un tel sur échantillonnage permet avantageusement d'obtenir une plus grande résolution dans la réduction de PAPR.

Selon un mode de réalisation particulier, le procédé de transmission met en œuvre successivement au moins les sous-étapes suivantes :

- application d'une transformée de Fourier inverse rapide sur les composantes réelle et imaginaire du symbole de constellation, centrées sur une fréquence égale à Fe/2,
- transposition des composantes réelle et imaginaire en bande de base,
- sur-échantillonnage d'un facteur L, avec L=2 par exemple, à une fréquence égale à 2.Fe des composantes réelle et imaginaire en bande de base,
- filtrage passe-bas des composantes réelle et imaginaire,
- modulation desdites composantes à une fréquence porteuse à Fe/2.

Plus particulièrement, le procédé selon l'invention met en œuvre l'équation suivante :

$$S(l.\frac{Te}{2}) = \sum_{n=0}^{N-1}\left[A_n cos(\pi.l.\frac{n}{N}) - B_n sin(\pi.l.\frac{n}{N})\right]$$

avec :

- $A_n$ et $B_n$ les composantes réelle et imaginaire du symbole de constellation modulant ladite porteuse courante d'indice n,
- S l'ensemble des échantillons temporels réels préconstruits relatifs à un bloc OFDM,
- 
$$Te = \frac{1}{Fe}$$

- et

$$0 \leq l < J = \text{L.N} = 2.N.$$

Selon un mode réalisation du dispositif, le module de détection détecte un pic de puissance maximale.

Selon un mode de réalisation du dispositif, le module de transformation comprend en outre :

- un module de génération des J échantillons temporels associés à la porteuse courante d'indice n, $0 \leq n < M$,

et le module de construction et d'accumulation comprend :

- un module de construction des J échantillons temporels de la porteuse courante d'ordre n mappée par X'n et
- un module d'accumulation.

L'invention concerne également un programme d'ordinateur comportant des instructions pour la mise en œuvre d'un procédé de transmission décrit ci-dessus lorsque ce programme est exécuté par un processeur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1A et 1B représentent respectivement le schéma de traitement d'un signal OFDM et un schéma synoptique simplifié du système de réduction du PAPR selon l'invention ;
- la figure 2 illustre les principales étapes d'un procédé de transmission selon un mode de réalisation de l'invention ;
- la figure 3 illustre un schéma synoptique détaillé du système de réduction du PAPR selon un mode de réalisation de l'invention;
- les figures 4A et 4B illustrent les différentes sous-étapes de calcul mises en œuvre par le procédé selon l'invention ;
- les figures 5A à 5C illustrent différents exemples de constellations corrigées obtenues selon l'invention ;
- la figure 6 illustre la structure d'un dispositif de transmission selon l'invention.

## 5. Description d'un mode de réalisation de l'invention

### 5.1 Principe général

L'invention repose donc sur l'utilisation d'un contrôle de correction de la constellation modulant un signal OFDM de façon à réduire de façon optimale le rapport puissance crête à puissance moyenne, ou PAPR.

Plus précisément, l'invention met en œuvre une « pré-construction » d'un signal numérique réel corrigé représentatif du signal obtenu en sortie du dispositif de transmission dont le PAPR est réduit.

Au cours de la « pré-construction » du signal numérique, porteuse par porteuse, le procédé selon l'invention détecte des pics de PAPR. En présence de ces pics, le procédé selon l'invention délivre une information de contrôle de correction complexe permettant d'optimiser la modification de la constellation associée aux porteuses du signal OFDM afin de réduire ces pics.

En particulier, l'information de contrôle est obtenue en tenant compte à la fois de la porteuse courante à corriger et des porteuses précédemment corrigées. L'invention permet donc d'adapter porteuse par porteuse la constellation du signal à émettre.

De nouvelles constellations de modulation de signal permettant une réduction du PAPR sont donc obtenues selon l'invention.

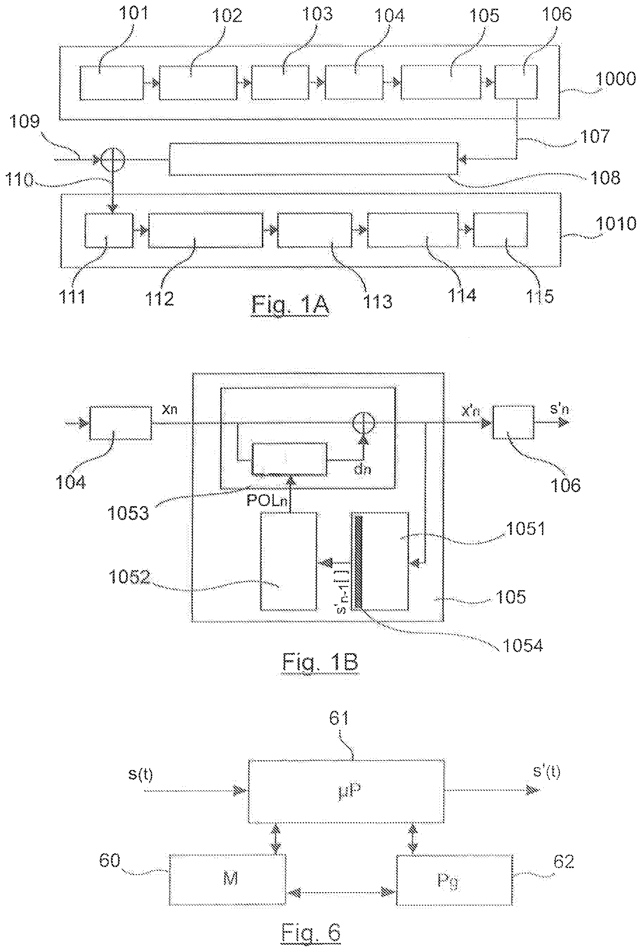

On décrit ci-après en relation avec la figure 1A, un exemple de schéma de traitement d'un signal OFDM visant à réduire le PAPR. Un signal OFDM est, selon le mode de réalisation illustré par la figure 1A, traité selon une succession d'étapes :

à l'émission par l'émetteur 1000 :

- génération 101 de données source ;
- codage et entrelacement 102 desdites données délivrant des données entrelacées ;
- modulation desdites données entrelacées 103 par exemple selon une modulation QAM consistant à mapper les données entrelacées représentatives du signal source sur des symboles complexes $X_n$ appartenant à la constellation;
- insertion 104 de porteuses pilotes;
- correction 105 des symboles d'un bloc OFDM visant à réduire le PAPR selon le procédé de l'invention ;
- modulation OFDM 106 mettant par exemple en œuvre une transformée de Fourier rapide inverse (IFFT) délivrant des symboles OFDM, cette modulation consiste à mapper les symboles corrigés sur les porteuses d'un modulateur OFDM pour générer le signal OFDM;
- transmission 107 dudit signal OFDM sur un canal de transmission 108, cette transmission s'accompagne généralement de bruit, par exemple un bruit blanc gaussien 109 ;

et à la réception par le récepteur 1010 :

- réception 110 d'un signal dit reçu ;
- démodulation 111 OFDM dudit signal reçu mettant en œuvre selon un mode particulier une transformée de Fourier rapide (FFT pour « Fast Fourier Transform » en anglais) délivrant un signal reçu transformé;
- estimation de canal 112 ;
- démodulation 113 dudit signal reçu transformé délivrant un signal démodulé ;
- désentrelacement et décodage 114 dudit signal démodulé ;
- détermination du taux d'erreur binaire (de l'anglais « bit error rate »).

L'invention propose donc une technique de correction 105 spécifique qui permet de réduire efficacement le PAPR tout en étant simple d'implémentation. En outre, la correction selon l'invention est mise en œuvre uniquement à la transmission et ne nécessite pas de modifications des récepteurs existants.

Selon l'illustration de la figure 1A, le procédé d'émission selon l'invention intervient après l'insertion 104 de porteuses pilotes. Cette insertion peut selon d'autres modes de réalisation intervenir de manière imbriquée avec des étapes du procédé selon l'invention ou de manière successive aux étapes du procédé selon l'invention. Pour simplifier la description, il est considéré que le procédé selon l'invention prend en compte un bloc de N symboles dont la taille est égale au nombre total N de porteuses du modulateur OFDM (donc M=N). Le bloc de M symboles peut tout aussi bien être inférieur à N pour tenir compte de porteuses réservées et dont la valeur est fixée par ailleurs, ou bien de porteuses non modulées sur les bords du spectre.

Le procédé de réduction de PAPR 105 selon l'invention est décrit selon le synoptique de la figure 1B. Plus précisément, les étapes essentielles du procédé de transmission selon l'invention sont mises en œuvre dans le domaine fréquentiel entre les étapes classiques de modulation 103 et de modulation OFDM 106 mettant par exemple en œuvre une transformée de Fourier rapide inverse IFFT.

Plus précisément, selon la figure 1B, le procédé selon l'invention correspond à un système d'asservissement de type rétroactif (de l'anglais « Feed-Back »).

En particulier, ce procédé fonctionne en temps réel suivant un cadencement d'horloge à une fréquence Fe, par exemple la fréquence d'échantillonnage des données sources. En outre, ce procédé est non-itératif, en d'autres termes une correction portant sur un bloc de N porteuses (N correspondant également à la taille de la transformée de Fourier et de la transformée de Fourier inverse) est entièrement calculée en une durée de N échantillons à la fréquence Fe.

Le procédé consiste à « pré-construire » grâce à un module de construction et d'accumulation 1051, un module de détection et de comparaison 1052 et un module de correction 1053 représentés sur la figure 1B, avant transformée de Fourier inverse rapide (IFFT) 106, le signal temporel réel qui pourrait être obtenu en sortie du dispositif de transmission à partir de la suite des différentes porteuses d'un bloc de signal OFDM qui sont modulées par des symboles de constellation.

Pour chaque porteuse du modulateur OFDM modulée par un symbole Xn, le module de construction et d'accumulation 1051 calcule simultanément tous les J échantillons de la réponse temporelle de cette porteuse mappée par le symbole X'n qui pourraient être obtenus après transformée de Fourier inverse mise en œuvre par le modulateur OFDM, si cette porteuse était transformée dans le domaine temporel isolément. Puis, de porteuse en porteuse, les différentes réponses temporelles sont accumulées par le module de construction et d'accumulation 1051 jusqu'à la porteuse courante d'ordre N-1.

A l'ordre n, le vecteur signal S'n-1[ ] en sortie du module de construction et d'accumulation est constitué des échantillons temporels calculés parallèlement pour les porteuses corrigées jusqu'à l'ordre n-1, avec n >1 et pour la porteuse d'indice 0 non corrigée mappée par $X_0$. A la fin de la construction par accumulation, les échantillons temporels en sortie du module de construction et d'accumulation 1051 correspondent aux J échantillons série du signal temporel S'(t) obtenu en sortie du dispositif de transmission sur la durée du bloc OFDM.

A partir du début d'un bloc OFDM, le vecteur S'n-1[ ] des échantillons temporels se construit donc progressivement à chaque cycle d'horloge et accumulation. Puis, le vecteur S'n-1[ ] est utilisé par le module de détection et de comparaison 1052 pour détecter l'apparition d'un pic de puissance sur un échantillon du vecteur. Par comparaison avec l'échantillon temporel en regard du pic, parmi les échantillons de la réponse temporelle de la porteuse courante n, le module de détection et de comparaison 1052 en déduit une information de contrôle POLn de correction correspondant à une information représentative de la polarité du pic détecté.

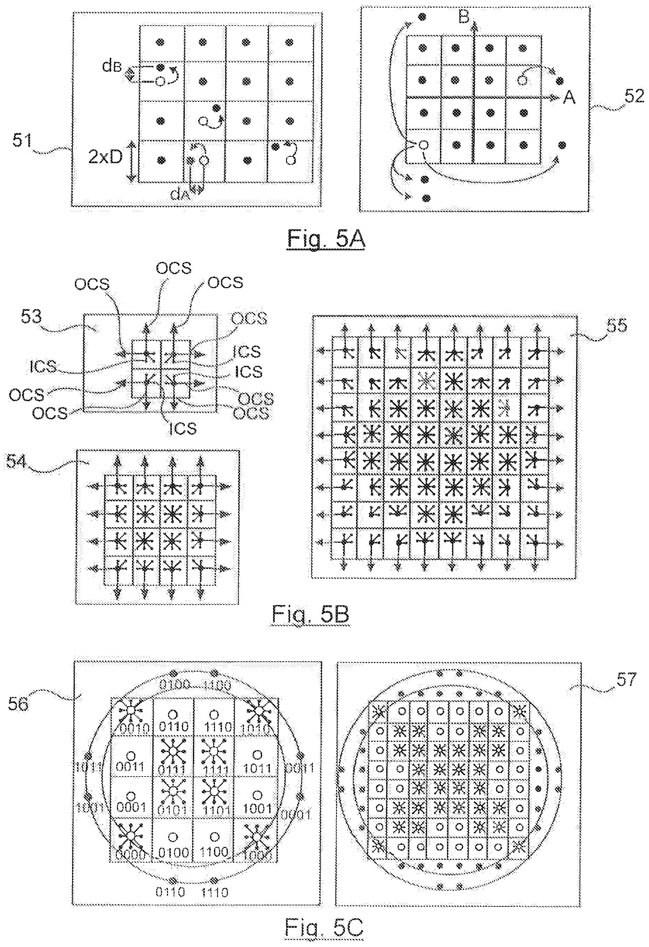

Le module de correction 1053 détermine une correction dn de constellation à partir de cette information de contrôle POLn de correction, telle qu'illustrée par la suite selon les exemples des figures 5A à 5C.

L'information de contrôle POLn, calculée à l'indice n à partir de S'n-1[ ], comporte un cycle d'horloge de retard, représenté par une barre verticale noire 1054, par rapport au symbole Xn qui va être corrigé en X'n par cette information de contrôle POLn et accumulé au prochain coup d'horloge. En effet, une prise en compte registrée à la fréquence Fe est effectuée en sortie du module de construction et d'accumulation 1051. Ainsi, à chaque front de cette horloge, une nouvelle entrée, à savoir un symbole de constellation corrigé X'n est chargée et une nouvelle sortie est actualisée et correspond aux échantillons temporels de la porteuse n mappée par le symbole de constellation corrigé X'n accumulés respectivement aux échantillons déjà accumulés aux ordres précédents. Les valeurs correspondantes des échantillons temporels sont alors maintenues en sortie durant un cycle d'horloge.

En fonction de l'information de contrôle complexe POLn, le module de correction 1053 applique une correction de constellation modifiant les coordonnées du symbole de constellation Xn en lui imposant un déplacement complexe dn.

Un tel déplacement dn complexe a pour effet à la prochaine étape d'accumulation de réduire l'amplitude du pic détecté par rapport à ce qu'elle aurait pu être sans correction. Cette accumulation produira donc une nouvelle valeur S'n[ ], de la suite des échantillons temporels préconstruits en parallèle, avec une contrainte de régression sur l'échantillon de plus fort niveau.

Le procédé selon l'invention est reproduit ensuite à chaque nouveau symbole de constellation. Au fur et à mesure des porteuses corrigées, de nouveaux pics à corriger peuvent apparaître et sont corrigés. Le procédé selon l'invention se termine à la fin d'un bloc OFDM courant une fois que l'ensemble des porteuses qui le constitue ont été parcourues.

Le module de construction et d'accumulation 1051 est alors réinitialisé pour traiter le bloc OFDM suivant.

***5.2 Description détaillée et implémentation des différentes étapes du procédé de transmission selon l'invention***

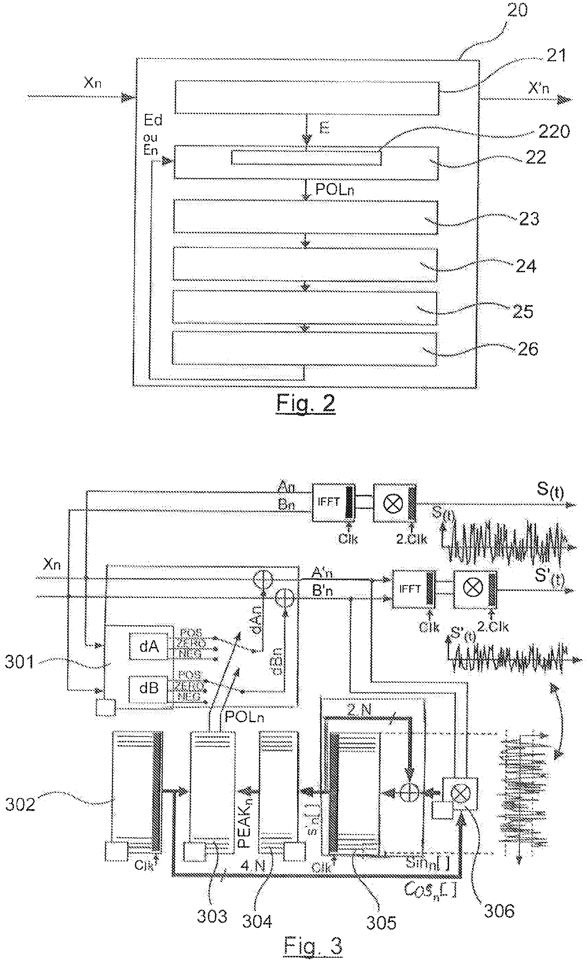

La figure 2 représente en détail les étapes mises en œuvre selon un mode de réalisation de l'invention afin d'élaborer une correction de la constellation qui module chaque porteuse d'un bloc OFDM et ceci en vue de réduire le PAPR du signal transmis tandis que la figure 3 représente un exemple d'implémentation physique de ces étapes.

Ces deux aspects sont détaillés ci-après.

*5.2.1 Description des différentes étapes du procédé selon l'invention*

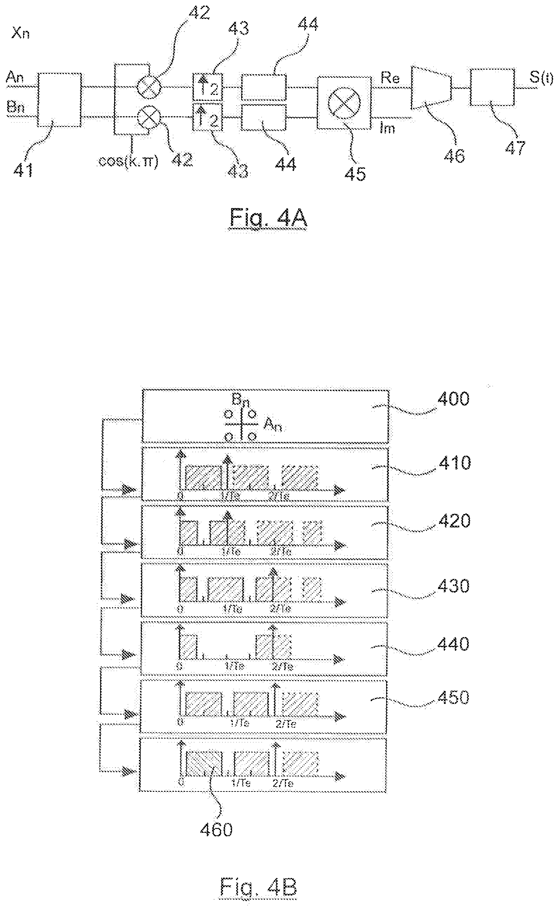

Le procédé selon l'invention effectue pour chaque porteuse modulée par un symbole de constellation un traitement équivalent à celui comprenant successivement au moins les sous-étapes représentées en relation avec les figures 4A et 4B.

En effet, la réduction de PAPR doit s'appliquer au signal temporel qui « serait » émis sans correction en sortie du dispositif de transmission OFDM.

A partir de la suite des symboles de constellation qui modulent les porteuses, chaque symbole de constellation Xn étant défini par un couple de valeurs 400 (An, Bn) qui définissent les coordonnées du symbole de constellation Xn dans le plan complexe tel que Xn=An+j.Bn, le procédé selon l'invention préconstruit un signal réel numérique représentatif du signal analogique radiofréquence qui sera obtenu en sortie du dispositif de transmission.

Pour ce faire, selon le procédé selon l'invention, on considère tout d'abord la mise en œuvre d'une transformée fréquence-temps, considérée à des fins d'illustration comme étant une transformée de Fourier inverse rapide (IFFT) (41) sur les composantes réelle (An) et imaginaire (Bn) de chaque symbole de constellation Xn modulant respectivement chacune des N porteuses d'un bloc OFDM considéré, n étant un entier tel que $0 \leq n \leq N-1$. En effet, il est considéré que M=N et que certaines porteuses parmi les N porteuses peuvent être réservées.

On obtient alors la représentation 410 du signal sur la figure 4B et l'expression suivante en sortie de l'IFFT à t = k. Te, avec $0 \leq k < K = N$ et K. Te = T, la durée du bloc OFDM considéré :

$$x(k.Te) = \sum_{n=0}^{N-1} X_n.e^{2.j.\pi.\frac{n}{T}.k.Te}$$

Puis, une transposition (42) des composantes réelles et imaginaire en bande de base est effectuée et représentée 420 sur la figure 4B conformément à l'équation :

$$y(k.Te) = \sum_{n=0}^{N-1} cos(k.\pi).X_n.e^{2.j.\pi.\frac{n}{N}.k}$$

Ensuite, un sur-échantillonnage (43) d'un facteur L, avec par exemple L=2 et à une fréquence égale donc à 2.Fe, des composantes réelle et imaginaire en bande de base est mis en œuvre conformément à l'équation suivante :

$$y(l.\frac{Te}{2}) = \sum_{n=0}^{N-1} cos(l.\frac{\pi}{2}).X_n.e^{2.j.\pi.\frac{n}{N}.l}$$

avec t = 1. Te/2 et $0 \leq 1 < J = LN = 2.N$ ce qui comporte l'insertion de zéro un échantillon sur deux tel que représenté (430) sur la figure 4B.

On procède ensuite à un filtrage (44) passe-bas des composantes réelle et imaginaire pour ne conserver que le signal en bande de base (440) selon l'équation :

$$z(l.\frac{Te}{2}) = \frac{1}{2}.\sum_{n=0}^{N-1} X_n.e^{j.\pi.l(\frac{n}{N}-\frac{1}{2})}$$

Puis, une modulation (45) des composantes à une fréquence porteuse égale à Fe/2 est mise en œuvre telle que représentée (450) par la figure 4B et conformément à l'équation suivante :

$$p(l.\frac{Te}{2}).z(l.\frac{Te}{2}) = \frac{1}{2}.\sum_{n=0}^{N-1} X_n.e^{j.\pi.l(\frac{n}{N}-\frac{1}{2}+\frac{1}{2})} = \frac{1}{2}.x(l.\frac{Te}{2})$$

Il est à noter que généralement les premières et dernières porteuses d'un bloc OFDM ne sont pas modulées afin d'éviter des problèmes de recouvrement du spectre fréquentiel associé à chaque bloc OFDM ; seulement M porteuses sont donc effectivement mappées avec $M \leq N$, M étant un entier. Il est aussi possible de considérer que ces porteuses font partie des porteuses dites réservées pour lesquelles aucune correction n'est appliquée et dans ce cas prendre de façon plus simple M=N.

Le signal $z(l.\frac{Te}{2})$ modulé à une fréquence porteuse égale à Fe/2 est donc égal au signal de sortie d'une transformée de Fourier inverse rapide sur-échantillonné à la fréquence égale à 2.Fe et est représenté (460) sur la figure 4B.

On obtient finalement l'expression $S(l.\frac{Te}{2})$ à un facteur près :

$$S\left(l.\frac{Te}{2}\right) = Re\left[x\left(l.\frac{Te}{2}\right)\right] = \sum_{n=0}^{N-1}\left[A_n cos\left(\pi.l.\frac{n}{N}\right) - B_n sin\left(\pi.l.\frac{n}{N}\right)\right] \text{ avec } 0 \leq l \leq 2.N$$

Cette équation est par la suite appelée « équation résultante » et représente le signal temporel qui « serait » émis sans correction en sortie du dispositif de transmission OFDM, pour un bloc OFDM considéré.

Cette expression présente des propriétés de symétries temporelles (symétrie hermitienne) illustrées par l'expression suivante avec $0 \leq p \leq N$ :

$$\left[A_n cos\left(\pi.n.\frac{2.N-p}{N}\right) - B_n sin\left(\pi.n.\frac{2.N-p}{N}\right)\right] = \left[A_n cos\left(\pi.p.\frac{n}{N}\right) + B_n sin\left(\pi.p.\frac{n}{N}\right)\right]$$

De ce fait, la suite des 2.N échantillons des composantes en cosinus des N porteuses est paire, tandis que la suite des 2.N échantillons des composantes en sinus des N porteuses est impaire.

En outre, l'expression de $S(l.\frac{Te}{2})$ présente également des propriétés de symétrie fréquentielles illustrées par l'expression suivante avec $0 \leq q \leq N/2$ :

$$\left[A_n cos\left(\pi.l.\frac{N-q}{N}\right) - B_n sin\left(\pi.l.\frac{N-q}{N}\right)\right] = cos\left(\pi.l\right).\left[A_n cos\left(\pi.l.\frac{q}{N}\right) + B_n sin\left(\pi.l.\frac{q}{N}\right)\right]$$

ce qui entraîne que les composantes de la deuxième demi-suite pour $\frac{N}{2} \leq N - q \leq N$ des N porteuses peut être déduite de la première (pour $0 \leq q \leq N/2$) en effectuant la même opération que pour tirer profit des symétries temporelles et en inversant un échantillon temporel complexe sur deux.

Ainsi, l'expression du signal résultant $S(l.\frac{Te}{2})$ sans correction est utilisée par la suite comme référence, et actualisée en corrigeant porteuse par porteuse les valeurs d'origine des composantes réelle et imaginaire (An, Bn) au moyen de nouvelles valeurs corrigées (A'n, B'n).

Il est bien entendu qu'un signal complexe peut être représenté par ses composantes réelle et imaginaire sous la forme An +jBn ou sous la forme $C_n e^{j\varphi} = C_n cos\varphi + jC_n sin\varphi$.

En effet, comme indiqué précédemment, l'objet de l'invention est de mettre en œuvre la « pré-construction », en d'autre termes d'obtenir, un signal numérique représentatif du point de vue dynamique et valeurs de crêtes, du signal analogique en sortie du dispositif de transmission, en d'autres termes d'obtenir une « image » du signal analogique en sortie du dispositif de transmission et de corriger au fur et à mesure, porteuse par porteuse, chaque symbole de constellation modulant une porteuse afin d'obtenir un signal préconstruit et corrigé dont le PAPR est réduit.

Le procédé de transmission 20, selon un mode de réalisation de l'invention illustré par la figure 2, permettant d'appliquer une correction de la constellation de modulation en vue de réduire le PAPR du signal transmis comprend, pour une porteuse courante d'indice n, n étant un entier tel que 0≤n≤N-1, une première étape de génération 21 de J=L.N échantillons temporels complexes associés à ladite porteuse courante d'indice n, avec L un entier ≥1.

Puis, le procédé de transmission 20 selon l'invention comprend, pour une porteuse courante d'indice n, n étant un entier tel que 0≤n≤N-1, une deuxième étape de détection 22 d'un pic de puissance maximale parmi un ensemble $E_n$ précédemment préconstruit. L'ensemble $E_n$ correspond aux L.N échantillons temporels réels préconstruits résultant de l'accumulation des L.N échantillons temporels réels préconstruits précédemment associés aux n-1 porteuses précédemment corrigées lorsque n≥1 et des L.N échantillons temporels réels préconstruits associés à la porteuse non corrigés lorsque n=0.

Dans le cas où n=0, il s'agit de la première porteuse du bloc OFDM il n'y a donc pas d'ensemble de L.N échantillons temporels réels préconstruits associés à un ensemble de porteuses précédemment corrigées. De ce fait, pour la détection de pic on utilise un ensemble par défaut $E_D$ de L.N échantillons temporels réels préconstruits et ainsi E0=ED.

Il peut par exemple s'agir d'un ensemble de L.N échantillons temporels réels préconstruits nuls, dans ce cas aucun pic ne sera détecté et l'information de correction sera nulle.

Selon une autre variante, on peut considérer que cet ensemble par défaut $E_D$ de L.N échantillons temporels réels préconstruits correspond à l'ensemble des échantillons temporels réels préconstruits associés à la porteuse courante non corrigée d'indice 0 .

Selon une autre alternative, on peut considérer que cet ensemble par défaut $E_D$ de L.N échantillons temporels réels préconstruits correspond à un ensemble prédéterminé obtenu par exemple selon un modèle statistique.

Dans le cas où n≥1, par exemple n=5, l'étape de détection (22) est effectuée parmi un ensemble $E_5$ de L.N échantillons temporels réels préconstruits résultants de l'accumulation de l'ensemble des L.N échantillons temporels réels préconstruits associés aux quatre porteuses précédentes, précédemment corrigés à savoir les porteuses d'indice 1, 2, 3 et 4 et de L.N échantillons temporels réels préconstruits associés à la porteuse non corrigée d'indice 0.

Le procédé comprend une étape de comparaison 220 entre le pic détecté et l'échantillon temporel en regard du pic parmi les L.N échantillons temporels complexes associés à la porteuse courante d'indice n fournis par l'étape de génération 21. L'étape de comparaison délivre une information de contrôle de correction complexe (Poln).

Par exemple, parmi l'ensemble $E_D$ d'échantillons temporels réels préconstruits par défaut, le procédé détecte un pic correspondant au quatrième échantillon temporel réel. Puis le procédé compare (220) le signe (positif ou négatif) de ce quatrième échantillon temporel réel de l'ensemble $E_D$ d'échantillons temporels réels préconstruits par défaut avec le quatrième échantillon temporel complexe des échantillons temporels complexes associés à la porteuse d'indice 0 fournis par l'étape de génération 21.

L'étape de comparaison 220 délivre une information de contrôle de correction complexe POLn appartenant à au moins une des catégories suivantes :

- information de contrôle de correction complexe de partie réelle, respectivement imaginaire, positive lorsque le signe du pic (c'est-à-dire le signe de ses cordonnées complexes) et de la partie réelle, respectivement imaginaire, de l'échantillon temporel complexe correspondant sont identiques,
- information de contrôle de correction complexe de partie réelle, respectivement imaginaire, négative lorsque le signe du pic et de la partie réelle, respectivement imaginaire, de l'échantillon temporel complexe correspondant sont opposés,
- information de contrôle de correction complexe de partie réelle, respectivement imaginaire, nulle lorsque l'amplitude de puissance de l'échantillon temporel du pic détecté est inférieure à un seuil prédéterminé, ou lorsque ladite porteuse courante d'indice n est dite « réservée » et ne doit pas être corrigée.

En effet, il est possible que certaines porteuse telles que les porteuse pilotes ou les porteuses non mappées aux bords du spectre ne soient pas corrigées afin de conserver intact les valeurs de mappage associées respectivement constante ou nulle. Ceci s'applique donc en particulier pour les porteuses pilotes lorsque l'insertion intervient avant le procédé selon l'invention de réduction de PAPR.

Puis, le procédé de transmission 20 selon l'invention comprend, pour une porteuse courante d'indice n modulée par un symbole de constellation Xn, n étant un entier tel que 0≤n≤N-1, une troisième étape de correction 23 du symbole de constellation Xn modulant ladite porteuse courante d'indice n en fonction de l'information de contrôle de correction complexe. L'étape de correction délivre une porteuse courante corrigée d'indice n associée à un ensemble de L.N échantillons temporels complexes corrigés.

Plus précisément, l'information de contrôle permet de sélectionner un déplacement complexe du symbole de constellation sur les axes des abscisses et des ordonnées du plan complexe de la constellation du symbole parmi trois possibilités de déplacement pour chaque partie réelle ou imaginaire du déplacement complexe. En effet, le déplacement complexe impose un déplacement réel (respectivement imaginaire) négatif (NEG) lorsque l'information de contrôle de correction complexe comporte une partie réelle (respectivement imaginaire) positive. Le déplacement complexe impose un déplacement réel (respectivement imaginaire) positif (POS) lorsque l'information de contrôle de correction comporte une partie réelle (respectivement imaginaire) négative. Le déplacement complexe impose un déplacement réel (respectivement imaginaire) nul (ZERO) lorsque l'information de contrôle de correction comporte une partie réelle (respectivement imaginaire) nulle (ce qui revient à une absence de correction).

Le déplacement complexe de correction suivant ses deux coordonnées est donc effectué dans le sens inverse de la formation des pics de PAPR.

Une fois ce déplacement complexe sélectionné en fonction de l'information de contrôle de correction complexe, une sommation des coordonnées (An, Bn) du symbole de constellation Xn avec les coordonnées (dAn, dBn) du déplacement complexe sélectionné dn est effectuée. L'étape de correction délivre les nouvelles coordonnées (A'n, B'n) du symbole de constellation corrigé X'n correspondant.

En outre, selon un mode de réalisation de l'invention, et dans le but de limiter la complexité d'implémentation, la valeur absolue du déplacement complexe est fixe d'une porteuse à l'autre dudit bloc OFDM et correspond à une valeur prédéterminée, par exemple une valeur comprise entre 0,25 et 0,5 fois la distance entre le point de constellation et la frontière du secteur de décision.

Puis, le procédé de transmission 20 selon l'invention comprend, pour une porteuse courante d'indice n, n étant un entier tel que 0≤n≤N-1, une quatrième étape de construction (24) des L.N échantillons temporels réels préconstruits associés à la porteuse courante corrigée d'indice n donc modulée par X'n.

Puis, le procédé de transmission 20 selon l'invention comprend, pour une porteuse courante d'indice n, n étant un entier tel que 0≤n≤N-1, une cinquième étape d'accumulation 25. Cette étape d'accumulation associe deux à deux les L.N échantillons temporels réels préconstruits associés à la porteuse courante corrigée d'indice n avec l'ensemble de L.N échantillons temporels réels préconstruits résultant de l'accumulation des L.N échantillons temporels réels préconstruits associés aux n-1 porteuses précédentes, précédemment corrigées lorsque n≥1 et des L.N échantillons temporels réels préconstruits associés à la porteuse non corrigée pour n=0.

### 5.2.2 Implémentation physique des différentes étapes du procédé selon l'invention

Les valeurs (An,Bn) définissent un symbole de constellation Xn (Xn=An+j.Bn). Par rapport à une chaîne conventionnelle qui génère un signal S(t) à partir de la suite des valeurs (An,Bn) transformées par une modulation OFDM (IFFT) telle que représentée dans le haut de la figure 3, le procédé selon l'invention génère des valeurs corrigées (A'n,B'n) qui donnent après modulation OFDM (IFFT) un signal S'(t) dans lequel les pics de PAPR qui affectent S(t) ont été atténués.

Pour ce faire, comme décrit précédemment le procédé selon l'invention préconstruit progressivement par accumulation et simultanément les échantillons temporels complexes du signal S'(l.Te/2) sur la durée d'un bloc OFDM ainsi que défini conformément à l'équation « résultante » précédemment mentionnée. En d'autres termes, l'expression du signal résultant $S(l.\frac{Te}{2})$ sans correction selon l'équation « résultante » précédemment mentionnée est utilisée par la suite comme référence, et actualisée en corrigeant porteuse par porteuse les valeurs d'origine des composantes réelle et imaginaire (An, Bn) au moyen des nouvelles valeurs corrigées (A'n, B'n).

Durant cette « pré-construction » l'algorithme élimine les pics de signal au fur et à mesure qu'ils se forment en les détectant puis en orientant la correction de constellation des symboles Xn+1 d'arrivée dans le sens inverse de la formation de ces pics.

Conformément au schéma de la figure 3, l'implémentation du procédé selon un mode de réalisation de l'invention comprend six modules de traitement, de 301 à 306 tel que décrit par la suite.

Plus précisément, le module de correction 301 reçoit en entrée, successivement et au rythme de l'horloge, les valeurs de coordonnées de constellation conventionnelles (c'est-à-dire sans correction issue de la constellation de modulation appliquée précédemment 103 par exemple selon une modulation QAM) suivant deux composantes (ou coordonnées) An et Bn par bloc OFDM. Le module de correction détermine trois possibilités de déplacement complexe (POS, ZERO, NEG), pour chacune des deux composantes qui auront pour effet de modifier les coordonnées du symbole de constellation Xn courant.

Le procédé selon l'invention permet donc de sélectionner un couple de solution de déplacement complexe (dAn,dBn) pour corriger un symbole de constellation Xn, avec trois possibilités. Par addition avec les composantes An et Bn d'origine, un nouveau couple (A'n,B'n) est obtenu après correction 23. Ce nouveau couple, appliqué en entrée de l'IFFT (modulation OFDM 106) en relation avec la figure 1A, participe à la génération du signal S'(t). Ce nouveau couple va également être réintroduit dans l'algorithme pour réactualiser la suite des J = L.N = 2.N échantillons temporels réels préconstruits (N = Taille FFT = taille IFFT) de la réponse temporelle réelle en cours de pré-construction qui serait obtenue après IFFT et modulation, conformément à l'équation « résultante », précédemment mentionnée, mise en œuvre par le module 306 de construction et par le module d'accumulation 305.

Comme décrit ci-dessus, des opérations s'effectuent entre les L.N échantillons temporels réels préconstruits résultants de l'accumulation des L.N échantillons temporels réels préconstruits associés aux n-1 porteuses précédentes, précédemment corrigées lorsque n≥1 et, des L.N échantillons temporels réels préconstruits associés à la porteuse non corrigée pour n=0, et l'ensemble des échantillons temporels complexes correspondant aux composantes en cosinus et sinus de la porteuse courante considérée d'indice n qui sont stockés en mémoire ROM ou bien calculés algorithmiquement par le module 302 de génération d'un signal multiporteuse. Le module 302 de génération d'un signal multiporteuse délivre donc pour chaque symbole de constellation Xn considéré, la suite des J = L.N = 2.N échantillons temporels complexes en cosinus et sinus de la porteuse n à laquelle il est associé dans le bloc OFDM de taille N. Le module 302 construit 21 donc les L.N échantillons temporels complexes de chaque porteuse n.

A chaque coup d'horloge tous les échantillons temporels complexes du signal S'(l.Te/2) sont ainsi préconstruits progressivement en accumulant 25 dans le module d'accumulation 305 le résultat courant suivant l'équation mentionnée ci-dessus, avec les différents résultats des opérations de correction précédemment effectuées.

Par exemple, les échantillons temporels complexes correspondant aux composantes en cosinus et en sinus de la porteuse d'indice n constituent les éléments des vecteurs $COS_n[\ ]$ et $SIN_n[\ ]$ définis de la façon suivante :

$$COS_n[\ ] = \begin{bmatrix} \cos\left(\pi.\frac{n}{N}\right) \\ \cos\left(2.\pi.\frac{n}{N}\right) \\ ----\\ ----\\ \cos\left((2.N-2).\pi.\frac{n}{N}\right) \\ \cos((2.N-1).\pi.\frac{n}{N}) \end{bmatrix} \quad SIN_n[\ ] = \begin{bmatrix} \sin\left(\pi.\frac{n}{N}\right) \\ \sin\left(2.\pi.\frac{n}{N}\right) \\ ----\\ ----\\ \sin\left((2.N-2).\pi.\frac{n}{N}\right) \\ \sin((2.N-1).\pi.\frac{n}{N}) \end{bmatrix}$$

On obtient donc un vecteur signal S'n[ ] résultant de l'accumulation 25 par le module d'accumulation 305 des L.N = 2.N échantillons temporels réels construits dans le module 306 associés aux n-1 porteuses précédentes, précédemment corrigés, lorsque n≥1 et des 2.N échantillons temporels réels construits associés à la porteuse non corrigée pour n=0. Le vecteur signal S'n[ ] est ensuite utilisé en entrée d'un module de détection 304 de pic PEAKn, qui, à l'indice n, a pour expression :

$$S'_n[\ ] <= S'_{n-1}[\ ] + A'_{n-1}.COS_{n-1}[\ ] - B'_{n-1}.SIN_{n-1}[\ ]\ 0 < n < N$$

et avec par exemple S'$_0$[ ] = 0.

Le module d'accumulation 305 étant registré, l'opérateur « <= » de l'équation ci-dessus signifie que le terme de gauche qui correspond à la sortie du module d'accumulation 305 sera conforme au terme de droite un cycle d'horloge plus tard.

Ainsi, on obtient à l'indice n une valeur intermédiaire S'n[ ] du vecteur des J=L.N=2.N échantillons temporels réels préconstruits représentatifs de S'(I.Te/2) en sortie du module d'accumulation 305 registré, lorsque la suite des symboles de constellation est parvenu au symbole Xn d'indice n.

Selon un mode de réalisation, lorsque n = N-1 alors S'$_{N-1}$[ ] contient les échantillons temporels réels construits de S'(I.Te/2) pour les N porteuses du bloc OFDM considéré, à l'exception d'une dernière valeur qui est négligée, et le module d'accumulation 305 sera par exemple remis à zéro pour un nouveau bloc OFDM.

A chaque coup d'horloge Clk matérialisant la cadence de traitement d'une porteuse à une autre, conformément à l'équation « résultante », précédemment mentionnée, J=L.N = 2.N résultats sont chargés dans le module d'accumulation 305. En parallèle, les échantillons temporels complexes des composantes en cosinus et sinus fournies par le module 302 de génération d'un signal multiporteuse, qui précédemment étaient à l'indice n-1, sont remplacés par ceux associés à la porteuse d'indice n qui sera par la suite modulée par le symbole de constellation X'n, soit Xn caractérisé par un nouveau couple de valeurs corrigées de ses coordonnées (A'n, B'n).

A partir de la sortie du bloc d'accumulation 305, un module 304 de détection de pic PEAKn permet ensuite de détecter, 22, l'éventuelle apparition d'un pic de signal en recherchant l'échantillon temporel réel d'amplitude maximale parmi les 2.N échantillons temporels réels préconstruits du vecteur signal S'n[ ] résultants de l'accumulation de l'ensemble des 2.N échantillons temporels réels préconstruits associés aux n-1 porteuses précédentes, précédemment corrigés lorsque n≥1 et des 2.N échantillons temporels réels associés à la porteuse non corrigée pour n=0. Cet échantillon temporel réel est déterminé par l'équation suivante :

$$PEAK_n = max_{0 \le l < 2.N}(S'_n(l)).$$

Le module de détection 304 fournit alors l'information relative au pic détecté à un module de comparaison 303 qui va déterminer 220 si les échantillons temporels complexes en cosinus et sinus de la porteuse courante à l'indice n correspondant au pic ont une polarité complexe POLn =POLAn+j.POLBn coïncidente avec le pic détecté. Cette polarité est par la suite utilisée comme une information de contrôle de correction complexe. Pour exemple, POLn est définie par :

$$POL_n = \left[ Sgn\left(COS_n(l_{peak})\right) - j.Sgn\left(SIN_n(l_{peak})\right) \right].Sgn(PEAK_n).$$

Si les polarités entre la composante en cosinus (- sinus) de l'échantillon temporel complexe et le pic détecté sont identiques alors POLAn (POLBn) est positif et une correction par déplacement complexe dAn (dBn) négatif (NEG) est choisie. Inversement si les polarités sont opposées, alors POLAn (POLBn) est négatif et une correction par déplacement complexe dAn (dBn) positif est sélectionnée pour obtenir A'n et B'n les composantes corrigées du symbole de constellation Xn.

Dans le cas où l'amplitude de la composante en cosinus (ou sinus) de l'échantillon temporel complexe en coïncidence avec le pic détecté est trop faible par rapport à un certain seuil Pseuil (correspondant à une amplitude seuil de POLn) et n'apportera pas de réduction du pic de manière significative alors le déplacement réel (respectivement imaginaire) ZERO du déplacement complexe, c'est-à-dire sans correction, est appliqué.

Si la correction ne peut être suffisamment efficace, il est préférable de n'apporter aucune modification au symbole de constellation considéré. En effet, dans ce cas une modification peut détériorer le taux d'erreur binaire ou augmenter inutilement la puissance moyenne par un déplacement complexe à l'intérieur de la constellation d'origine.

Par contre, dans le cas de la technique TR décrite en relation avec l'art antérieur, le seuil Pseuil n'est pas nécessaire puisqu'une porteuse pilote n'apportera pas de perturbation du signal utile quel que soit l'efficacité de correction qui sera obtenue.

Le module 304 de détection de pic fournit donc l'emplacement de l'échantillon temporel réel qui présente un pic de niveau ainsi que son signe. Le tableau ci-dessous résume pour la composante An (Bn) le sens de déplacement complexe qui sera apporté en fonction du signe de $COS_n(I_{peak})$, respectivement $(-SIN_n(I_{peak}))$, pour une valeur Pseuil correspondant à une amplitude seuil de POLn comprise en pratique entre 0,15 et 0,3.

| $COS_n(I_{peak})$ $(-SIN_n(I_{peak}))$ | Valeur Signe | Pic Détecté | Valeur Signe | Sens de Déplacement complexe (dAn, dBn) |
|---|---|---|---|---|
| > Pseuil | +1 | 1 | +1 | négatif |
| | +1 | 1 | -1 | positif |
| -Pseuil < < Pseuil | -- | 1 | +1 | Zero |
| | -- | 1 | -1 | Zero |
| < -Pseuil | -1 | 1 | +1 | Positif |
| | -1 | 1 | -1 | Négatif |
| Absence de niveau crête | -- | 0 | -- | Zero |

Si l'on cherche à déplacer les symboles de constellation en restant à l'intérieur de la constellation d'origine, un déplacement réel dAn (imaginaire dBn) positif pour An (Bn) se traduit par un déplacement réel vers la droite (respectivement imaginaire vers le haut) du point de constellation sur le plan complexe et inversement vers la gauche (le bas) pour un déplacement réel (imaginaire) négatif.

Au contraire, si l'on cherche à déplacer les symboles de constellation vers l'extérieur de la constellation d'origine tel que dans la technique TI - CES, un point est déplacé vers un point opposé de la constellation étendue seulement si le signe de la composante An (Bn) est contraire à celui du sens de déplacement réel dAn (imaginaire dBn), positif ou négatif, choisi en fonction de la polarité POLAn (POLBn) ; autrement il n'y a pas de modification du point.

### 5.2.3 Résultats du procédé selon l'invention

80 à 90 % des crêtes de signal menant à un fort PAPR peuvent être résorbées au moyen du procédé précédemment décrit.

Néanmoins, il est à noter que certains pics de signal apparaissent très tard dans la formation du bloc OFDM et ne peuvent être corrigés que partiellement par le procédé selon l'invention lorsque celui-ci ne dispose que d'un pouvoir de correction assez limité de porteuse en porteuse.

De ce fait, pour obtenir une correction performante les pics de PAPR du signal doivent survenir suffisamment tôt dans le processus de « pré-construction » pour être ensuite efficacement corrigés, ou alors il est nécessaire de déplacer les symboles de constellation vers l'extérieur de la constellation d'origine tel que dans le procédé CES.

A l'inverse, lors du traitement des premières porteuses, très peu de niveaux de crêtes élevés se distinguent et la capacité de correction du procédé est sous employée.

En outre, il est à noter qu'il est possible de combiner le procédé selon l'invention avec la technique peu complexe de « clipping » ou limiteur précédemment décrite en relation avec l'art antérieur afin d'augmenter la réduction du PAPR.

### 5.3 Description d'exemples de nouvelles constellations obtenues selon l'invention.

Comme pour les techniques TI-CES, CD, ACE et TR de l'art antérieur, le procédé selon l'invention aboutit à une modification de la constellation de modulation des porteuses dans le domaine fréquentiel avant IFFT, pour obtenir ensuite dans le domaine temporel un signal à PAPR réduit.

L'avantage du procédé selon l'invention est la flexibilité de correction de constellation. En effet, tout type de correction peut être appliqué selon l'invention, du moment que celle-ci peut se traduire par un déplacement complexe contrôlé des composantes réelle et/ou imaginaire du symbole de constellation associé à une porteuse.

Ainsi, les déplacements de sens positif ou négatif sur l'axe des abscisses et l'axe des ordonnées du plan complexe peuvent conduire à conserver les points de constellation dans leur secteur de décision ou dans la constellation d'origine ou bien à les déplacer en dehors.

En relation avec la figure 5A, le procédé selon l'invention permet d'appliquer à la fois des déplacements complexes à l'intérieur (51) ainsi qu'à l'extérieur (52) de la constellation d'origine.

De ce fait, la mise en œuvre du procédé selon l'invention délivre deux nouvelles classes plus générales de correction de constellation:

- la classe 51 ICS (de l'anglais « Inside Constellation Shift ») pour laquelle, lorsque la modification appliquée reste modérée, les points de constellation déplacés restent inscrits dans la constellation d'origine, cette classe incluant notamment en partie la technique CD de l'art antérieur précédemment décrite, et
- la classe 52 OCS (Outside Constellation Shift) pour laquelle les points sont déplacés à l'extérieur de la constellation d'origine, cette classe incluant les techniques TI-CES et ACE de l'art antérieur précédemment décrites.

Au regard de la technique TR (de l'art antérieur précédemment décrite, il n'y a pas de notion de constellation, la constellation des porteuses pilote de réduction de pics (PRT) étant défini uniquement dans le but de réduire le PAPR, ce qui peut être également contrôlé par le procédé selon l'invention.

La correction de constellation mise en œuvre selon l'invention peut donc se substituer à n'importe laquelle des corrections de constellation des techniques de réduction de PAPR de l'art antérieur précédemment décrites, en y adoptant, pour chacune d'entre elles prise séparément, l'ensemble des avantages ou non.

Un avantage du système proposé est alors de pouvoir regagner en efficacité en permettant d'associer plusieurs techniques, dont les défauts respectifs distincts peuvent dans une certaine mesure se compenser.

La figure 5B représente à titre d'exemple l'ensemble des déplacements complexes autorisés pour des constellations QPSK (53), MAQ16 (54), MAQ64 (55) résultants d'une combinaison originale de corrections de constellation dites ICS (petites flèches vers l'intérieur) pour lesquelles les points de constellation déplacés restent inscrits dans la constellation d'origine modifié et de corrections de constellation dites OCS (grande flèches vers l'extérieur) pour lesquels les points sont déplacés à l'extérieur de la constellation d'origine.

De la même manière sont représentées à la figure 5C, deux constellations MAQ16 (56) et MAQ64 (57) comportant à la fois des déplacements complexes ICS ou OCS. Pour les points conventionnels concernés par le déplacement complexe à l'extérieur de la constellation d'origine, deux solutions de corrections opposées par rapport à l'un des axes réel ou imaginaire sont possibles, le point blanc d'origine et un point noir « étendu » à l'extérieur.

Le nombre, ainsi que les positions des nouveaux points noirs « étendus » sont déterminés de manière à ce que l'augmentation de puissance moyenne de constellation reste limitée (constellation inscrite au mieux dans un cercle) avec néanmoins une proportion de points déplacés à l'extérieur de la constellation d'origine de l'ordre de un tiers ou la moitié par rapport aux points déplacés vers l'intérieur de la constellation d'origine de manière à conserver une bonne capacité de correction dans chaque cas MAQ16 (56) et 64 (57).

Ainsi, le procédé selon l'invention permet d'obtenir deux nouveaux types de constellation dite « ICS » ou « OCS » selon que les points de constellations sont déplacés respectivement vers l'intérieur ou l'extérieur de la constellation d'origine, qui combinent les avantages des différentes techniques de l'art antérieur.

### 5.4 Description du dispositif de transmission selon l'invention

On présente, en relation avec la figure 6, la structure simplifiée d'un dispositif de transmission d'un signal OFDM représentatif d'un signal OFDM source comprenant des blocs OFDM constitués chacun d'un ensemble de N porteuses mettant en œuvre une technique de transmission selon l'invention.

Un tel dispositif de transmission comprend un module de mémorisation 60 comprenant une mémoire tampon M, une unité de traitement 61, équipée par exemple d'un microprocesseur $\mu P$, et pilotée par le programme d'ordinateur 62, mettant en œuvre le procédé de transmission selon l'invention.

A l'initialisation, les instructions de code du programme d'ordinateur 62 sont par exemple chargées dans une mémoire RAM M avant d'être exécutées par le processeur de l'unité de traitement 61. L'unité de traitement 61 reçoit en entrée des symboles complexes Xn sur lesquels ont été mappés des données représentatives d'un un signal source. Le microprocesseur de l'unité de traitement 61 met en œuvre les étapes du procédé de transmission décrit précédemment, selon les instructions du programme d'ordinateur 62, pour effectuer une correction de la constellation de modulation visant à réduire le PAPR du signal transmis S'(t). Pour cela, le dispositif de transmission comprend :

- un module de mappage pour mapper les données représentatives du signal source sur les symboles complexes Xn, 0≤ n < M, appartenant à une constellation, n et M étant des entiers,
- un module de transformation pour transformer M symboles Xn en M symboles corrigés X'n, tels que X'n = Xn + dn avec dn une correction complexe,
- un modulateur OFDM à N porteuses pour générer le signal OFDM à partir des M symboles corrigés X'n mappés sur M porteuses, avec M≤N, N étant un entier.

Le module de transformation comprend :

- un module de construction et d'accumulation pour accumuler J échantillons temporels correspondant aux J échantillons de la porteuse d'ordre n mappée par X'n à J échantillons déjà présents, J étant un entier, J>0.
- un module de détection d'un pic sur les J échantillons en sortie du module de construction et d'accumulation à l'ordre n-1 et de comparaison de ce pic avec l'échantillon temporel en coïncidence parmi J échantillons temporels de la porteuse d'ordre n délivrant une information de contrôle de correction complexe,
- un module de correction déterminant la valeur complexe de correction dn pour obtenir le symbole corrigé X'n en fonction de l'information de contrôle de correction complexe.

Selon un mode de réalisation, le module de construction et d'accumulation comprend :

- un module de construction des J échantillons temporels de la porteuse courante d'ordre n mappée par X'n et
- un module d'accumulation,

et le module de transformation comprend en outre :

- un module de génération des J échantillons temporels complexes associés à ladite porteuse courante d'indice n, J étant un entier.

Ces moyens sont pilotés par le microprocesseur de l'unité de traitement 61.

**Revendications**

1. Procédé (20) de transmission d'un signal OFDM dont le traitement avant émission comprend :

   - un mapping de données représentatives d'un signal source sur des symboles complexes Xn, 0≤ n < M, appartenant à une constellation, n et M étant des entiers,
   - une transformation de M symboles Xn en M symboles corrigés X'n, telle que X'n = Xn + dn avec dn une correction complexe,
   - un mapping des M symboles corrigés X'n sur M parmi N porteuses d'un modulateur OFDM pour générer le signal OFDM, N étant un entier, M≤N,

   tel que la transformation comprend :

   - une étape d'initialisation d'un accumulateur et

   comprend pour chaque porteuse d'ordre n, n allant de 1 à M-1 :

   - une étape (1051, 1054) d'accumulation dans l'accumulateur respectivement à J échantillons déjà présents de J échantillons temporels correspondant aux J échantillons de la porteuse d'ordre n mappée par X'n,
   - une étape (1052) de détection d'un pic sur les J échantillons résultant de l'étape d'accumulation à l'ordre n-1 et de comparaison de ce pic avec l'échantillon temporel en coïncidence parmi J échantillons temporels de la porteuse d'ordre n délivrant une information de contrôle de correction complexe (Poln),
   - une étape (1053) de correction déterminant la valeur complexe de correction dn pour obtenir le symbole corrigé X'n en fonction de l'information de contrôle de correction complexe (Poln).

2. Procédé (20) de transmission selon la revendication 1, comprenant en outre une étape (21) de génération des J échantillons temporels associés à la porteuse courante d'ordre n et dans lequel l'étape (1052) de détection et de comparaison est mise en œuvre par rapport à l'étape (21) de génération des J échantillons temporels associés à la porteuse courante d'ordre n, avec un retard (1054) de durée déterminée correspondant à un cycle d'horloge.

**3.** Procédé (20) de transmission selon la revendication 1, dans lequel le pic détecté est un pic en puissance, les J échantillons temporels de la porteuse d'ordre n sont complexes et dans lequel l'information de contrôle de correction complexe (Poln) appartient à au moins une des catégories suivantes :

- information de contrôle de correction complexe de partie réelle, respectivement imaginaire, positive lorsque le signe du pic et de la partie réelle, respectivement imaginaire, de l'échantillon temporel complexe correspondant sont identiques,
- information de contrôle de correction complexe de partie réelle, respectivement imaginaire, négative lorsque le signe du pic et de la partie réelle, respectivement imaginaire, de l'échantillon temporel complexe correspondant sont opposés,
- information de contrôle de correction complexe de partie réelle (respectivement imaginaire) nulle lorsque l'amplitude de puissance de l'échantillon temporel du pic détecté est inférieure à un seuil prédéterminé, ou lorsque ladite porteuse courante d'indice n est dite « réservée » et ne doit pas être corrigée.

**4.** Procédé (20) de transmission selon la revendication 1, dans lequel l'étape de correction (23) met en œuvre une sommation des coordonnées du symbole de constellation Xn avec des coordonnées représentatives d'un déplacement complexe du symbole de constellation sur les axes des abscisses et des ordonnées du plan complexe de la constellation du symbole, le déplacement complexe étant sélectionné au moyen de l'information de contrôle de correction complexe parmi les déplacements complexes appartenant à au moins une des catégories suivantes :

- déplacement réel, respectivement imaginaire, du déplacement complexe, négatif lorsque l'information de contrôle de correction complexe comporte une partie réelle (respectivement imaginaire) positive;
- déplacement réel, respectivement imaginaire, du déplacement complexe positif lorsque l'information de contrôle de correction complexe comporte une partie réelle, respectivement imaginaire, négative;
- déplacement réel, respectivement imaginaire, du déplacement complexe nul lorsque l'information de contrôle de correction complexe comporte une partie réelle, respectivement imaginaire, nulle.

**5.** Procédé (20) de transmission selon la revendication 4, **caractérisé en ce que** la valeur absolue de la partie réelle, respectivement imaginaire, du déplacement complexe est fixe d'une porteuse à l'autre dudit bloc OFDM et **en ce que** ladite valeur absolue correspond à une valeur prédéterminée.

**6.** Procédé (20) de transmission selon la revendication 1, dans lequel la transformation met en œuvre une transformée de Fourier inverse discrète calculée porteuse après porteuse avec, pour une porteuse n donnée mappée par X'n, un calcul des J échantillons temporels.

**7.** Procédé (20) de transmission selon la revendication 1, dans lequel le nombre J d'échantillons temporels découle d'un facteur entier L, L≥1, de sur échantillonnage résultant en J = NL échantillons.

**8.** Procédé (20) de transmission selon la revendication 7, caractérisé en ce ledit procédé de transmission met en œuvre l'équation suivante, pour L=2 :

$$S(l.\frac{Te}{2}) = \sum_{n=0}^{N-1}\left[A_n cos(\pi.l.\frac{n}{N}) - B_n sin(\pi.l.\frac{n}{N})\right]$$

avec :

- $A_n$ et $B_n$ les composantes réelle et imaginaire d'un symbole de constellation modulant une porteuse courante d'indice n,
- S l'ensemble des échantillons temporels réels préconstruits relatifs à un bloc OFDM,
-

$$Te = \frac{1}{Fe} \text{ et } 0 \leq l < N.\text{L} = 2.N.$$

**9.** Dispositif (1000) de transmission d'un signal OFDM, **caractérisé en ce qu'**il comprend :

- un module de mappage pour mapper (103) des données représentatives d'un signal source sur des symboles complexes Xn, $0 \leq n < M$, appartenant à une constellation, n et M étant des entiers,
- un module de transformation pour transformer (105) M symboles Xn en M symboles corrigés X'n, tels que X'n = Xn + dn avec dn une correction complexe,
- un modulateur OFDM à N porteuses pour générer (106) le signal OFDM à partir des M symboles corrigés X'n mappés sur les N porteuses, N étant un entier, $M \leq N$.

le module de transformation comprenant :

- un module (305,306) de construction et d'accumulation pour accumuler J échantillons temporels correspondant aux J échantillons d'une porteuse d'ordre n mappée par X'n à J échantillons déjà présents,
- un module (304, 303) de détection d'un pic sur les J échantillons en sortie du module de construction et d'accumulation à l'ordre n-1 et de comparaison de ce pic avec l'échantillon temporel en coïncidence parmi J échantillons temporels de la porteuse d'ordre n délivrant une information (Poln) de contrôle de correction complexe,
- un module (301) de correction déterminant la valeur complexe de correction dn pour obtenir le symbole corrigé X'n en fonction de l'information (Poln) de contrôle de correction complexe.

**10.** Dispositif (1000) de transmission d'un signal OFDM selon la revendication 9 tel que le module (305,306) de construction et d'accumulation comprend :

- un module (306) de construction des J échantillons temporels de la porteuse courante d'ordre n mappée par X'n et
- un module (305) d'accumulation,

et tel que le module de transformation comprend en outre :

- un module (302) de génération des J échantillons temporels associés à la porteuse courante d'indice n.

**11.** Programme d'ordinateur comportant des instructions pour la mise en œuvre d'un procédé de transmission selon la revendication 1 lorsque ce programme est exécuté par un processeur.

**12.** Support d'informations comportant des instructions de programme adaptées à la mise en œuvre des étapes suivantes lorsque ledit programme est chargé et exécuté dans un dispositif de transmission OFDM :

- un mapping de données représentatives d'un signal source sur des symboles complexes Xn, $0 \leq n < M$, appartenant à une constellation, n et M étant des entiers,
- une transformation de M symboles Xn en M symboles corrigés X'n, telle que X'n = Xn + dn avec dn une correction complexe,
- un mapping des M symboles corrigés X'n sur N porteuses d'un modulateur OFDM pour générer le signal OFDM, N étant un entier, $M \leq N$,

tel que la transformation comprend :

- une étape d'initialisation d'un accumulateur et

comprend pour chaque porteuse d'ordre n, n allant de 1 à M-1 :

- une étape (25) d'accumulation dans l'accumulateur respectivement à J échantillons déjà présents de J échantillons temporels correspondant aux J échantillons de la porteuse d'ordre n mappée par X'n,
- une étape (22) de détection d'un pic sur les J échantillons résultant de l'étape d'accumulation à l'ordre n-1 et de comparaison de ce pic avec l'échantillon temporel en coïncidence parmi J échantillons temporels de la porteuse d'ordre n délivrant une information de contrôle de correction complexe (Poln),
- une étape (23) de correction déterminant la valeur complexe de correction dn pour obtenir le symbole corrigé X'n en fonction de l'information de contrôle de correction complexe (Poln).

**Patentansprüche**

1. Verfahren (20) zur Übertragung eines OFDM-Signals, dessem Verarbeitung vor dem Senden Folgendes umfasst:

   - ein Abbilden von Daten, die für ein Quellsignal repräsentativ sind, auf komplexe Symbole Xn, $0 \leq n < M$, die zu einer Konstellation gehören, wobei n und M Ganzzahlen sind,
   - ein Transformieren von M Symbolen Xn in M korrigierte Symbole X'n, wie beispielsweise X'n = Xn + dn, wobei dn eine komplexe Korrektur ist,
   - ein Abbilden der M korrigierten Symbole X'n auf M von N Trägern eines OFDM-Modulators, um das OFDM-Signal zu erzeugen, wobei N eine Ganzzahl ist, $M \leq N$,

   so dass das Transformieren Folgendes umfasst:

   - einen Schritt des Initialisierens eines Akkumulators und

   für jeden Träger n-ter Ordnung, wobei n von 1 bis M-1 geht, Folgendes umfasst:

   - einen Schritt (1051, 1054) des Akkumulierens, in dem Akkumulator, jeweils mit J bereits vorhandenen Abtastwerten, von J zeitlichen Abtastwerten, die den J Abtastwerten des Trägers n-ter Ordnung entsprechen, der durch X'n abgebildet wurde,
   - einen Schritt (1052) des Detektierens einer Spitze von den J Abtastwerten resultierend aus dem Schritt des Akkumulierens bei der n-1-ten Ordnung und des Vergleichens dieser Spitze mit dem zusammenfallenden zeitlichen Abtastwert von J zeitlichen Abtastwerten des Trägers n-ter Ordnung, der eine Steuerungsinformation komplexer Korrektur (Poln) liefert,
   - einen Schritt (1053) des Korrigierens, der den komplexen Korrekturwert dn bestimmt, um das korrigierte Symbol X'n in Abhängigkeit von der Steuerungsinformation komplexer Korrektur (Poln) zu erhalten.

2. Verfahren (20) zur Übertragung nach Anspruch 1, ferner umfassend einen Schritt (21) des Erzeugens der J zeitlichen Abtastwerte, die mit dem aktuellen Träger n-ter Ordnung in Verbindung stehen, und wobei der Schritt (1052) des Detektierens und des Vergleichens im Verhältnis zum Schritt (21) des Erzeugens der J zeitlichen Abtastwerte, die mit dem aktuellen Träger n-ter Ordnung in Verbindung stehen, mit einer Verzögerung (1054) einer bestimmten Dauer durchgeführt wird, die einem Taktzyklus entspricht.

3. Verfahren (20) zur Übertragung nach Anspruch 1, wobei die detektierte Spitze eine Leistungsspitze ist, die J zeitlichen Abtastwerte des Trägers n-ter Ordnung komplex sind, und wobei die Steuerungsinformation komplexer Korrektur (Poln) zu mindestens einer der folgenden Kategorien gehört:

   - Steuerungsinformation komplexer Korrektur mit einem Real- bzw. Imaginärteil, der positiv ist, wenn das Vorzeichen der Spitze und des Real- bzw. Imaginärteils des entsprechenden zeitlichen Abtastwerts identisch sind,
   - Steuerungsinformation komplexer Korrektur mit einem Real- bzw. Imaginärteil, der negativ ist, wenn das Vorzeichen der Spitze und des Real- bzw. Imaginärteils des entsprechenden zeitlichen Abtastwerts entgegengesetzt sind,
   - Steuerungsinformation komplexer Korrektur mit einem Real- (bzw. Imaginär-) Teil, der null ist, wenn die Leistungsamplitude des zeitlichen Abtastwerts der detektierten Spitze unter einer vorbestimmten Schwelle liegt, oder wenn der aktuelle Träger mit Index n "reserviert" ist und nicht korrigiert werden darf.

4. Verfahren (20) zur Übertragung nach Anspruch 1, wobei der Schritt des Korrigierens (23) eine Summierung der Koordinaten des Konstellationssymbols Xn mit Koordinaten umsetzt, die für eine komplexe Verschiebung des Konstellationssymbols auf den Achsen der Abzissen und der Ordinaten der komplexen Ebene der Konstellation des Symbols repräsentativ sind, wobei die komplexe Verschiebung mittels der Steuerungsinformation komplexer Korrektur aus den komplexen Verschiebungen ausgewählt wird, die zu mindestens einer der folgenden Kategorien gehören:

   - Real- bzw. Imaginärverschiebung der komplexen Verschiebung, die negativ ist, wenn die Steuerungsinformation komplexer Korrektur einen positiven Real- (bzw. Imaginär-) Teil aufweist;
   - Real- bzw. Imaginärverschiebung der komplexen Verschiebung, die positiv ist, wenn die Steuerungsinformation komplexer Korrektur einen negativen Real- bzw. Imaginärteil aufweist;
   - Real- bzw. Imaginärverschiebung der komplexen Verschiebung, die null ist, wenn die Steuerungsinformation komplexer Korrektur einen Real- bzw. Imaginärteil aufweist, der null ist.

5. Verfahren (20) zur Übertragung nach Anspruch 4, **dadurch gekennzeichnet, dass** der Absolutwert des Real- bzw. Imaginärteils der komplexen Verschiebung von einem Träger zum anderen des OFDM-Blocks fest ist, und dadurch, dass der Absolutwert einem vorbestimmten Wert entspricht.

6. Verfahren (20) zur Übertragung nach Anspruch 1, wobei die Transformation eine inverse diskrete FourierTransformation umsetzt, die mit einer Berechnung der J zeitlichen Abtastwerte für einen gegebenen Träger n, der durch X'n abgebildet ist, Träger nach Träger berechnet wird.

7. Verfahren (20) zur Übertragung nach Anspruch 1, wobei die Anzahl J von zeitlichen Abtastwerten aus einem ganzzahligen Überabtastungsfaktor L, $L \geq 1$, hervorgeht, der zu J = NL Abtastwerten führt.

8. Verfahren (20) zur Übertragung nach Anspruch 7, **dadurch gekennzeichnet, dass** das Verfahren zur Übertragung die folgende Gleichung für L = 2 umsetzt:

$$S\left(l.\frac{Te}{2}\right) = \sum_{n=0}^{N-1}\left[A_n \cos\left(\pi.l.\frac{n}{N}\right) - B_n \sin\left(\pi.l.\frac{n}{N}\right)\right]$$

wobei:

- $A_n$ und $B_n$ die Real- und Imaginärkomponenten eines Konstellationssymbols sind, das einen aktuellen Träger mit Index n moduliert,
- S die Gesamtheit der vorab konstruierten realen zeitlichen Abtastwerte bezogen auf einen OFDM-Block ist,
-

$$Te = \frac{1}{Fe} \; und \; 0 \leq l < N.L = 2.N.$$

9. Vorrichtung (1000) zur Übertragung eines OFDM-Signals, **dadurch gekennzeichnet, dass** sie Folgendes umfasst:

- ein Abbildungsmodul, um Daten, die für ein Quellsignal repräsentativ sind, auf komplexe Symbole Xn, $0 \leq n < M$, abzubilden (103), die zu einer Konstellation gehören, wobei n und M Ganzzahlen sind,
- ein Transformationsmodul, um M Symbole Xn in M korrigierte Symbole X'n zu transformieren (105), wie beispielsweise X'n = Xn + dn, wobei dn eine komplexe Korrektur ist,
- einen OFDM-Modulator mit N Trägern, um das OFDM-Signal anhand der M korrigierten Symbole X'n zu erzeugen (106), die auf die N Träger abgebildet sind, wobei N eine Ganzzahl ist, $M \leq N$.

das Transformationsmodul umfassend:

- ein Aufbau- und Akkumulationsmodul (305, 306), um J zeitliche Abtastwerte zu akkumulieren, die den J Abtastwerten eines Trägers n-ter Ordnung entsprechen, die durch X'n auf J bereits vorhandene Abtastwerte abgebildet wurden,
- ein Modul (304, 303) zum Detektieren einer Spitze von den J Abtastwerten am Ausgang des Aufbau- und Akkumulationsmoduls bei der n-1-ten Ordnung und zum Vergleichens dieser Spitze mit dem zusammenfallenden zeitlichen Abtastwert von J zeitlichen Abtastwerten des Trägers n-ter Ordnung, der eine Steuerungsinformation komplexer Korrektur (Poln) liefert,
- ein Korrekturmodul (301), das den komplexen Korrekturwert dn bestimmt, um das korrigierte Symbol X'n in Abhängigkeit von der Steuerungsinformation komplexer Korrektur (Poln) zu erhalten.

10. Vorrichtung (1000) zur Übertragung eines OFDM-Signals nach Anspruch 9, so dass das Aufbau- und Akkumulationsmodul (305, 306) Folgendes umfasst:

- ein Modul (306) zum Aufbau der J zeitlichen Abtastwerte des aktuellen Trägers n-ter Ordnung, der durch X'n abgebildet wurde, und

- ein Akkumulationsmodul (305),

und so dass das Transformationsmodul ferner Folgendes umfasst:

- ein Modul (302) zur Erzeugung der J zeitlichen Abtastwerte, die mit dem aktuellen Träger mit Index n in Verbindung stehen.

11. Computerprogramm umfassend Anweisungen für die Umsetzung des Übertragungsverfahrens nach Anspruch 1 wenn dieses Programm von einem Prozessor ausgeführt wird.

12. Informationsträger umfassend Programmanweisungen, die für die Umsetzung der folgenden Schritte geeignet sind, wenn das Programm in eine OFDM-Übertragungsvorrichtung geladen ist und darin ausgeführt wird:

- ein Abbilden von Daten, die für ein Quellsignal repräsentativ sind, auf komplexe Symbole Xn, $0 \le n < M$, die zu einer Konstellation gehören, wobei n und M Ganzzahlen sind,
- ein Transformieren von M Symbolen Xn in M korrigierte Symbole X'n, wie beispielsweise X'n = Xn + dn, wobei dn eine komplexe Korrektur ist,
- ein Abbilden der M korrigierten Symbole X'n auf N Träger eines OFDM-Modulators, um das OFDM-Signal zu erzeugen, wobei N eine Ganzzahl ist, $M \le N$,

so dass das Transformieren Folgendes umfasst:

- einen Schritt des Initialisierens eines Akkumulators und

für jeden Träger n-ter Ordnung, wobei n von 1 bis M-1 geht, Folgendes umfasst:

- einen Schritt (25) des Akkumulierens, in dem Akkumulator, jeweils mit J bereits vorhandenen Abtastwerten, von J zeitlichen Abtastwerten, die den J Abtastwerten des Trägers n-ter Ordnung entsprechen, der durch X'n abgebildet wurde,
- einen Schritt (22) des Detektierens einer Spitze von den J Abtastwerten resultierend aus dem Schritt des Akkumulierens bei der n-1-ten Ordnung und des Vergleichens dieser Spitze mit dem zusammenfallenden zeitlichen Abtastwert von J zeitlichen Abtastwerten des Trägers n-ter Ordnung, der eine Steuerungsinformation komplexer Korrektur (Poln) liefert,
- einen Schritt (23) des Korrigierens, der den komplexen Korrekturwert dn bestimmt, um das korrigierte Symbol X'n in Abhängigkeit von der Steuerungsinformation komplexer Korrektur (Poln) zu erhalten.

## Claims

1. Method (20) for transmitting an OFDM signal, the processing of which before transmission comprises:

- a mapping of data representative of a source signal on complex symbols Xn, $0 \le n < M$, belonging to a constellation, n and M being integers,
- a transformation of M symbols Xn into M corrected symbols X'n, such that X'n = Xn + dn, with dn being a complex correction,
- a mapping of the M corrected symbols X'n on M out of N carriers of an OFDM modulator to generate the OFDM signal, N being an integer, $M \le N$,

such that the transformation comprises:

- a step of initialization of an accumulator and

comprises, for each carrier of order n, n ranging from 1 to M-1:

- a step (1051, 1054) of accumulation in the accumulator respectively with J samples already present of J temporal samples corresponding to the J samples of the carrier of order n mapped by X'n,
- a step (1052) of detection of a peak on the J samples resulting from the step of accumulation to the order n-1 and of comparison of this peak with the coinciding temporal sample out of J temporal samples of the carrier of order n delivering a complex correction control information item (Poln),
- a correction step (1053) determining the complex correction value dn to obtain the corrected symbol X'n as a function of the complex correction control information item (Poln).

2.  Transmission method (20) according to Claim 1, further comprising a step (21) of generation of J temporal samples associated with the current carrier of order n and in which the detection and comparison step (1052) is implemented in relation to the step (21) of generation of the J temporal samples associated with the current carrier of order n, with a delay (1054) of determined duration corresponding to a clock cycle.

3.  Transmission method (20) according to Claim 1, in which the detected peak is a power peak, the J temporal samples of the carrier of order n are complex and in which the complex correction control information item (Poln) belongs to at least one of the following categories:

    - real, respectively imaginary, part complex correction control information item, positive when the sign of the peak and of the real, respectively imaginary, part of the corresponding complex temporal sample are identical,
    - real, respectively imaginary, part complex correction control information item, negative when the sign of the peak and of the real, respectively imaginary, part of the corresponding complex temporal sample are opposite,
    - real (respectively imaginary) part complex correction control information item, zero when the power amplitude of the temporal sample of the detected peak is below a predetermined threshold, or when said current carrier of index n is said to be "reserved" and should not be corrected.

4.  Transmission method (20) according to Claim 1, in which the correction step (23) implements a summing of the coordinates of the constellation symbol Xn with coordinates representative of a complex displacement of the constellation symbol on the X and Y axes of the complex plane of the constellation of the symbol, the complex displacement being selected by means of the complex correction control information item out of the complex displacements belonging to at least one of the following categories:

    - real, respectively imaginary, displacement of the complex displacement, negative when the complex correction control information item comprises a positive real (respectively imaginary) part;
    - real, respectively imaginary, displacement of the complex displacement, positive when the complex correction control information item comprises a negative real, respectively imaginary, part;
    - real, respectively imaginary, displacement of the complex displacement, zero when the complex correction control information item comprises a zero real, respectively imaginary, part.

5.  Transmission method (20) according to Claim 4, **characterized in that** the absolute value of the real, respectively imaginary, part of the complex displacement is fixed from one carrier to another of said OFDM block and **in that** said absolute value corresponds to a predetermined value.

6.  Transmission method (20) according to Claim 1, in which the transformation implements a discrete inverse Fourier transform computed carrier after carrier with, for a given carrier n mapped by X'n, a computation of the J temporal samples.

7.  Transmission method (20) according to Claim 1, in which the number J of temporal samples evolves by an integer factor L, L$\geq$1, from oversampling resulting in J = NL samples.

8.  Transmission method (20) according to Claim 7, **characterized in that** said transmission method implements the following equation, for L=2:

$$S(l.\frac{Te}{2}) = \sum_{n=0}^{N-1} \left[ A_n cos(\pi.l.\frac{n}{N}) - B_n sin(\pi.l.\frac{n}{N}) \right]$$

with:

    - $A_n$ and $B_n$ being the real and imaginary components of a constellation symbol modulating a current carrier of index n,
    - S being the set of the preconstructed real temporal samples relating to an OFDM block,

-

$$Te = \frac{1}{Fe} \text{ and } 0 \leq l < N.\, \text{L} = 2.N.$$

**9.** Device (1000) for transmitting an OFDM signal, **characterized in that** it comprises:

- a mapping module for mapping (103) data representative of a source signal on complex symbols Xn, $0 \leq n < M$, belonging to a constellation, n and M being integers,
- a transformation module for transforming (105) M symbols Xn into M corrected symbols X'n, such that X'n = Xn + dn, with dn being a complex correction,
- an OFDM modulator with N carriers to generate (106) the OFDM signal from the M corrected symbols X'n mapped on the N carriers, N being an integer, $M \leq N$.

the transformation module comprising:

- a construction and accumulation module (305,306) for accumulating J temporal samples corresponding to the J samples of a carrier of order n mapped by X'n to J samples already present,
- a module (304, 303) for detecting a peak on the J samples at the output of the construction and accumulation module to the order n-1 and for comparing this peak with the coinciding temporal sample out of J temporal samples of the carrier of order n delivering a complex correction control information item (Poln),
- a correction module (301) determining the complex correction value dn to obtain the corrected symbol X'n as a function of the complex correction control information item (Poln).

**10.** Device (1000) for transmitting an OFDM signal according to Claim 9, such that the construction and accumulation module (305,306) comprises:

- a module (306) for constructing the J temporal samples of the current carrier of order n mapped by X'n and
- an accumulation module (305),

and such that the transformation module further comprises:

- a module (302) for generating the J temporal samples associated with the current carrier of index n.

**11.** Computer program comprising instructions for implementing a transmission method according to Claim 1 when this program is executed by a processor.

**12.** Information medium comprising program instructions suitable for implementing the following steps when said program is loaded and executed in an OFDM transmission device:

- a mapping of data representative of a source signal on complex symbols Xn, $0 \leq n < M$, belonging to a constellation, n and M being integers,
- a transformation of M symbols Xn into M corrected symbols X'n, such that X'n = Xn + dn, with dn being a complex correction,
- a mapping of the M corrected symbols X'n on N carriers of an OFDM modulator to generate the OFDM signal, N being an integer, $M \leq N$,

such that the transformation comprises:

- a step of initialization of an accumulator and

comprises for each carrier of order n, n ranging from 1 to M-1:

- a step (25) of accumulation in the accumulator respectively with J samples already present of J temporal samples corresponding to the J samples of the carrier of order n mapped by X'n,
- a step (22) of detection of a peak on the J samples resulting from the step of accumulation to the order n-1 and of comparison of this peak with the coinciding temporal sample out of J temporal samples of the carrier of order n delivering a complex correction control information item (Poln),
- a correction step (23) determining the complex correction value dn to obtain the corrected symbol X'n as a function of the complex correction control information item (Poln).

Fig. 1A

Fig. 1B

Fig. 6

Fig. 2

Fig. 3

Fig. 4A

Fig. 4B

Fig. 5A

Fig. 5B

Fig. 5C

**EP 2 904 754 B1**

## RÉFÉRENCES CITÉES DANS LA DESCRIPTION

**Documents brevets cités dans la description**

- US 2007140367 A